# EUROPEAN PATENT APPLICATION

(11) **EP 2 072 098 A1**
(43) Date of publication of application: **24.06.2009**
(21) Application number: 07829499.8
(22) Date of filing: 10.10.2007
(51) Int. Cl.: A63F 13/10, A63F 13/00, A63F 13/04, G06T 17/40

(54) **ELECTRONIC PLAY DEVICE, CONTROL METHOD FOR ELECTRONIC PLAY DEVICE AND GAME PROGRAM**

(30) Priority: 13.10.2006 JP 2006280777; 13.10.2006 JP 2006280769
(71) Applicant: Kabushiki Kaisha Sega Doing Business As Sega Corporation, Tokyo 144-8531 (JP)
(72) Inventor: SAMBONGI, Kazutomo, Ohta-ku, Tokyo 1448531 (JP); EGUCHI, Naotoshi, Ohta-ku, Tokyo 1448531 (JP); YAMAYA, Takeshi, Ohta-ku, Tokyo 1448531 (JP); TAKAHASHI, Kazuya, Ohta-ku, Tokyo 1448531 (JP)
(74) Representative: Treeby, Philip David William
(86) International application number: PCT/JP2007/069761
(87) International publication number: WO 2008/044708

(57) **Abstract**

A moving operation having much amusement particularly in a simulated shooting game using a simulated gun is implemented in accordance with an input operated by a player character that plays a role as a player. In order to achieve this, as a plurality of objects set in a virtual space, there are a player character (P) that is operated in accordance with an operation of the player, an enemy character (E) that becomes a match-up opponent of the player character (P), and a plurality of shield objects (G) that are disposed in movement areas of the player character (P) and the enemy character (E). When a coordinate transformation process for an image acquired from viewing the objects inside the virtual space from a virtual view point is performed in accordance with an output from an input device operated by the player and the transformed image is displayed in a display device, in a case where there is a movement direction for the player character (P) and/or the enemy character E, the movement destination of one character that receives the movement direction is set based on a position relationship between the other character and the shield object (G).

## Description

### BACKGROUND OF THE INVENTION

### Technical Field

The present invention relates to an electronic play device, a control method for an electronic play device, and a game program. In particular, the present invention relates to preferable modification of control technology that is applied to an arcade-type gun-shooting game device.

### Description of Related Art

A simulated gun-shooting game in which a player (gamer) shoots an enemy character inside a screen by operating a gun-type controller and acquires a score based on the success of the shooting is frequently implemented, for example, in so-called arcade-type electronic play devices.

In the above-described electronic play devices, three-dimensional virtualization technology in which objects are disposed in a virtual space formed as a three dimension, a perspective transformation process is performed for an image acquired from viewing the image from a virtual view point, and the transformed image is displayed on a monitor is used. An object described here is an object (target object) that is defined in the virtual space and is a generic term including a character (player character) that plays a role of the player, the enemy character, a background, and other targets.

As a conventional electronic play device for the above-described simulated gun shooting game, there is an electronic play device having selection inputting means that can be operated by a player for switching between a attack state in which the player character attacks the enemy character with its body exposed to the enemy character without hiding in an object formed of a gimmick such as a post and a state of defense in which the player character hides its body in a shadow of an object (for example, see Patent Documents 1 and 2). In addition, there is an electronic play device that has a pedal as means for operating the player character (for example, see Patent Document 3).
Patent Document 1: Japanese Patent Application Laid-Open No. 9-131466 Patent Document 2: Japanese Patent Application Laid-Open No. 11-169557 Patent Document 3: Japanese Patent Application Laid-Open No. 2000-116946

### SUMMARY OF THE INVENTION

### Problems to be Solved by the Invention

However, even when the attack state in which the body is exposed and the defense state in which the body is hidden can be selectively input, as described above, there is a case where the player character cannot be freely operated by the operation of the player. As an example, for example, there may be an electronic play device in which a representation that the player character is automatically moved to a place determined as a next point along a predetermined path by satisfying a predetermined progress condition such as destroying all the enemies appearing in a specific spot, elapse of a predetermined time, or giving predetermined damage is set. In such a case, when the player cannot be freely operated by the player's operation in the middle of an actual shooting game, the amusement of the electronic play device as a recent game device is insufficient.

On the other hand, the above-described electronic play device can operate the player character by using the pedal, which can increase the amusement of the game. However, the pedal is used only for operations, for example, that are performed for placing the player character to face the right or left side in the current position, and the electronic play device is not new and striking as a device for recent game devices that have various functions.

The object of the present invention is to provide an electronic play device, a control method for an electronic play device and a game program for implementing moving operations having much amusement, particularly in a simulated shooting game using a simulated gun, in accordance with an operation input for a player character that plays a role as a player.

### Means for Solving the Problems

In order to solve the above-described problems, the inventors of the present invention went through various considerations. For example, in the above-described electronic play device for a simulated gun-shooting game, there is an important factor in a tactic for appropriately switching conflicting factors of attack power and defense power such as attacking the enemy character in a dangerous state in which the body is exposed or defending the player character in a safe state in which the body is hidden in the shadow of an object by using a shield object formed of a gimmick such as a post. With this point primarily focused, the inventors of the present invention come to acquire a new finding for solving the above-described problems after repeating reviews for not only switch of the direction of the player character in the current position but also shield object related matters.

The present invention is based on the above-described finding. According to the present invention, there is provided an electronic play device that sets a player character that is operated in accordance with an operation of a player, an enemy character that becomes a match-up opponent of the player character, and a plurality of shield objects that are disposed in movement areas of the player character and the enemy character in a virtual space as a plurality of objects, performs a coordinate transformation process for an image acquired by viewing the objects inside the virtual space from a virtual view point in accordance with an output from an input device that is operated by the player by using an image processing device, and displays the transformed image in a display device. The electronic play device includes movement control means that, in a case where there is a movement direction for the player character and/or the enemy character, sets a movement destination of one character, which receives the movement direction, between the player character and the enemy character, based on a position relationship between the other character and the shield objects.

According to the present invention, there is provided an electronic play control method for controlling a moving operation of any of objects at a time when a coordinate transformation process for an image acquired by viewing the objects inside a virtual space from a virtual view point in accordance with an output from an input device that is operated by a player is performed by using an image processing device and the transformed image is displayed in a display device. A plurality of the objects set in the virtual space include a player character that is operated in accordance with an operation of the player, an enemy character that becomes a match-up opponent of the player character, and a plurality of shield objects that are disposed in movement areas of the player character and the enemy character. In addition, in a case where there is a movement direction for the player character and/or the enemy character, a movement destination of one character, which receives the movement direction, between the player character and the enemy character is set based on a position relationship between the other character and the shield objects.

According to the present invention, there is provided a game program for allowing a computer of an electronic play device, which sets a player character that is operated in accordance with an operation of a player, an enemy character that becomes a match-up opponent of the player character, and a plurality of shield objects that are disposed in movement areas of the player character and the enemy character in a virtual space as a plurality of objects, performs a coordinate transformation process for an image acquired by viewing the objects inside the virtual space from a virtual view point in accordance with an output from an input device that is operated by the player by using an image processing device, and displays the transformed image in a display device, to perform, in a case where there is a movement direction for the player character and/or the enemy character, a sequence for setting a movement destination of one character, which receives the movement direction, between the player character and the enemy character, based on a position relationship between the other character and the shield objects.

In movement control technology according to the aspects of the present invention, when there is a movement direction for one character, the movement destination of the character is automatically set based on a position relationship between the other character and the shield object. In such a case, instead of a simple operation of switching the direction of the player character in the current position, an operation for appropriately moving the player character within a predetermined area can be performed. In addition, a moving operation of the player character to a point that can be changed in various manners based on the shield object and the other character (for example, the enemy character) can be performed. Accordingly, for example, in the above-described simulated gun shooting game, an operation having high relevance to the shield object (and the other character) formed of a gimmick such as a post is implemented. As a result, the player can enjoy the tactic, which is accompanied by switching between conflicting factors of the attack power and the defense power, such as transiting to a safe state in which the body is hidden in the shadow of the shield object once and then appropriately transiting to a dangerous state in which the body is exposed for attack to the full. Furthermore, the movement control technology according to the present invention that automatically sets the movement destination may be represented in a manner that so-called a scenario is set for the movement destination of the character. In such a case, even a player (for example, a player who plays the game for the first time) who is not accustomed to the electronic play device can easily start the game and enjoy the game sufficiently.

In the above-described aspects, it is preferable that the movement control means sets the movement destination of the one character that receives the movement direction to a position in which at least a part of the one character, viewed from a view point of the other character, is hidden behind the shield object.

In addition, it may be configured that the shield object that is located closest to the one character in the movement direction of the one character that receives the movement direction is set as a movement destination shield object and the movement destination is set to a position located behind the movement destination shield object.

In addition, in the above-described movement control technology, in a case where the one character receives the movement direction, the movement destination of the one character that receives the movement direction may be set to a point on a virtual straight line that connects the position of the other character at a time point when the movement direction is received and a reference point of the movement destination shield object.

It is appropriate that the electronic play device according to the aspects of the invention provides a shooting game using a simulated gun and has a gun-type controller that can perform a simulated operation and left and right independent pedal switches that can be operated to move the player character in one direction and the other direction as movement directing means, as the input device.

In such a case, if the electronic play device further includes a gun aiming position detecting unit that detects an aiming position of the gun-type controller and moving speed of the player character is configured to be changed in accordance with the gun aiming position, the amusement of the gun-shooting game can be improved further.

In addition, it is preferable that, when the movement direction for a direction that is reverse to a moving direction is received from the pedal switch during a moving operation of the player character in the moving direction, the player character is turned back to be moved in the reverse direction and a new movement destination is set in a movement direction after the turning-back operation.

In addition, it is more preferable that the pedal switches also serve as special command inputting means used for directing a special operation other than the moving operation to the player character in a case where a predetermined operation is input under a predetermined condition. In such a case, by setting so-called a secret method using the special command, the amusement of the gun-shooting game can be improved further.

In addition, the object of the present invention is to provide control technology of movement of the virtual camera that notifies a player of the surrounding environment of a predetermined object without decreasing the realistic sensation of the game. In order to achieve the above-described object, according to the present invention, an image processing device that executes a game application program determines the danger that the player character inside the virtual space faces, and the virtual camera is forcedly moved from a position of the first person point of view to a position of the third person point of view during a limited time period.

According to the present invention, there is provided an electronic play device including: an image processing device that disposes a plurality of objects in a virtual space, changes the position of a virtual view point in accordance with an output from an operation device operated by a player, performs a coordinate transformation process for an image acquired from viewing the objects within the virtual space from the virtual view point, and displays the transformed image in display means. Here, the image processing device includes: first means that disposes a first object in the virtual space; second means that disposes a second object near the first object; third means that disposes the virtual view point in a first position near the second object; fourth means that disposes the virtual view point in a second position departed from the second object; fifth means that calculates the degree of influence of objects other than the first object and the second object on the first object; and sixth means that places the virtual view point in the first position before the result of calculation exceeds a threshold value, moves the virtual view point located in the first position from the first position to the second position when the result of calculation exceeds the threshold value to be fixed to the second position, and releases fixing of the virtual view point to the second position after a limited time elapses.

According to the present invention, there is provided an image processing method in which an electronic play device including an image processing device that disposes a plurality of objects in a virtual space, changes the position of a virtual view point in accordance with an output from an operation device operated by a player, performs a coordinate transformation process for an image acquired from viewing the objects within the virtual space from the virtual view point, and displays the transformed image in display means is implemented. Here, the image processing device, based on a game program, includes: a first process that disposes a first object in the virtual space; a second process that disposes a second object near the first object; a third process that disposes the virtual view point in a first position near the second object; a fourth process that disposes the virtual view point in a second position departed from the second object; a fifth process that calculates the degree of influence of objects other than the first object and the second object on the first object; and a sixth process that places the virtual view point in the first position before the result of calculation exceeds a threshold value, moves the virtual view point located in the first position from the first position to the second position when the result of calculation exceeds the threshold value to be fixed to the second position, and releases fixing of the virtual view point to the second position after a limited time elapses.

According to the present invention, there is provided a computer program that implements the above-described processes in an image processing device.

As described above, according to the present invention, for example, by moving the position of the view point that is in the first person point of view to a position of the third person point of view only during a moment at which the player character is in danger, a chance for the player to objectively recognize the virtual space is given without decreasing the realistic sensation on the basis of the first person point of view.

### Advantage of the Invention

According to the present invention, by performing an automatic control process in accordance with an input operation for the player character that plays a role as a player, a moving operation having much amusement particularly in a simulated shooting game using a simulated gun can be implemented. In addition, according to the present invention, for example, by moving the position of the view point that is in the first person point of view to a position of the third person point of view only during a moment at which the player character is in danger, a chance for the player to objectively recognize the virtual space is given without decreasing the realistic sensation on the basis of the first person point of view.

### BRIEF DESCRIPTION OF THE DRAWINGS

Fig. 1 is a perspective view illustrating the external configuration of an electronic play device.
Fig. 2 is a block diagram illustrating the overview of a game device according to an embodiment.
Fig. 3 is a detailed block diagram of the game device represented in Fig. 2.
Fig. 4 is a diagram schematically representing a field in which a virtual gun battle is developed.
Fig. 5 is a diagram illustrating a relationship between a posture (attack posture) of a player character and an aimed position in a state that the player character hides behind a screening object.
Fig. 6 is a diagram illustrating a relationship between a posture (non-attack posture) of the player character and an aimed position in a state that the player character hides behind the screening object.
Fig. 7 is a diagram illustrating a relationship between an operation of each pedal switch performed by a player and moving operations of the player character to the left or right side.
Fig. 8 is a diagram representing an example of positions in which the player character can hide in the shadow of the screening object.
Fig. 9 is a diagram representing a control process for selecting a position located on the opposite side of the enemy character through the screening object as a movement destination in consideration of the position of the enemy character in addition to the position of the screening object.
Fig. 10 is a diagram representing a control process for setting the movement destination to a position that is on a circular peripheral having a predetermined distance from the center of the screening object and is located on an extended line that connects the position of the enemy character and the center of the screening object.
Fig. 11 is a diagram representing an example of a default hiding position and other hiding positions of the player character.
Fig. 12 is a diagram representing an example of a shooting posture and a non-shooting posture of the player character in a case where the screening object is a drum can.
Fig. 13 is a diagram representing a control process for selecting a position located on the opposite side of the enemy character through the screening object as a movement destination in consideration of the position of the enemy character in addition to the position of the screening object.
Fig. 14 is a diagram representing a control process for setting the movement destination to a position that is on a circular peripheral having a predetermined distance from the center of the screening object and is located on an extended line that connects the position of the enemy character and the center of the screening object.
Fig. 15 is a diagram representing an example of a default hiding position and other hiding positions of the player character.
Fig. 16 is a diagram representing an example of a shooting posture and a non-shooting posture of the player character in a case where the screening object is a post.
Fig. 17 is a diagram representing a control process for selecting a position located on the opposite side of the enemy character through the screening object as a movement destination in consideration of the position of the enemy character in addition to the position of the screening object.
Fig. 18 is a diagram representing a control process for setting the movement destination to a position that is on a circular peripheral having a predetermined distance from the center of the screening object and is located on an extended line that connects the position of the enemy character and the center of the screening object.
Fig. 19 is a diagram representing an example of a default hiding position and other hiding positions of the player character.
Fig. 20 is a diagram representing an example of a shooting posture and a non-shooting posture of the player character in a case where the screening object is a tanker.
Fig. 21 is a diagram representing an operation of a player character at a time when the player character moves toward a position in which the player character can hide in the shadow of the nearest screening object in the movement direction.
Fig. 22 is a diagram representing an operation of a player character at a time when the player character moves toward a position in which the player character can hide in the shadow of the nearest screening object in the movement direction in a turning-back operation.
Fig. 23 is a diagram representing a setting example of a movement destination for a case where the screening object has a long and thin shape in the movement direction.
Fig. 24 is a diagram representing a setting example in which the movement destination is set on an extended line connecting the position of the enemy character and the center of the screening object for a case where the screening object has a long and thin shape in the movement direction.
Fig. 25 is a diagram representing a control operation for setting the movement destination to a position that is located on a line parallel to the movement direction in the shadow of the screening object and is located on an extended line connecting the position of the enemy character and the center of the screening object.
Fig. 26 is a diagram representing an example of a default hiding position and other hiding positions of the player character.
Fig. 27 is a diagram representing an example of a shooting posture and a non-shooting posture of the player character in a case where the screening object is a wall.
Fig. 28 is a diagram for describing various hiding positions of the player character.
Fig. 29 is a diagram representing an example in which two default hiding positions are set for a thin and long screening object.
Fig. 30 is a diagram representing a basic action (aiming) of a character according to an embodiment together with examples of a detailed screen and objects.
Fig. 31 is a diagram representing a basic action (running) of a character according to an embodiment together with examples of a detailed screen and objects.
Fig. 32 is a diagram representing a basic action (turning back) of a character according to an embodiment together with examples of a detailed screen and objects.
Fig. 33 is a diagram representing a jumping aside operation and a jumping aside shot according to an embodiment together with examples of a detailed screen and objects.
Fig. 34 is a diagram representing an avoiding operation of the character according to an embodiment together with examples of a detailed screen and objects.
Fig. 35 is a diagram representing a flow of representations of a head shot, a counter shot, and a staggering operation.
Fig. 36 is a diagram representing a condition subsequent (reset condition) of a normal zoom operation.
Figs. 37A to 37D are image examples for representing the process sequence and content of the normal zoom operation.
Fig. 38 is an image example for representing the process sequence and content of the quick zoom operation.
Fig. 39 is an example of a flowchart for describing control of a moving operation of the character.
Fig. 40 is an example of a flowchart for describing the process sequence of the normal zoom operation.
Fig. 41 is an example of a flowchart for describing the process sequence of the quick zoom operation.
Fig. 42 is a first example of a play screen displayed on a monitor.
Fig. 43 is a second example of a play screen displayed on a monitor.
Fig. 44 is a third example of a play screen displayed on a monitor.
Fig. 45 is a fourth example of a play screen displayed on a monitor.
Fig. 46 is a flowchart representing a data processing operation of an electronic play device.

### Description of Reference Numerals and Symbols

- 10:: CPU BLOCK
- 11:: VIDEO BLOCK
- 12:: SOUND BLOCK
- 100:: BUS ARBITER
- 101:: CPU (CONTROL DEVICE)
- 102:: MAIN MEMORY
- 103:: ROM
- 107:: OPERATION DEVICE
- 110:: VDP
- 111:: GRAPHIC MEMORY
- 112:: VIDEO CONVERTER
- 120:: SOUND PROCESSOR
- 121:: SOUND MEMORY
- 122:: D/A CONVERTER
- 130:: COMMUNICATION DEVICE
- 300:: GAME DEVICE (ELECTRONIC PLAY DEVICE
- 302:: FIRST CASING
- 304:: SECOND CASING
- 306:: MONITOR (DISPLAY DEVICE)
- 308:: GUN-TYPE CONTROLLER (INPUT DEVICE)
- 310:: PEDAL SWITCH (INPUT DEVICE)
- 312:: PEDAL SWITCH (INPUT DEVICE)
- 600:: PROGRAM DATA STORING UNIT
- 602:: CONTROL UNIT
- 604:: TRIGGER OF GUN-TYPE CONTROLLER
- 606:: GUN AIMING POSITION DETECTING UNIT
- E:: ENEMY CHARACTER (OBJECT)
- G:: SCREENING OBJECT (SHIELD OBJECT)
- P:: PLAYER CHARACTER (OBJECT)

### DETAILED DESCRIPTION OF PREFERRED EMBODIMENT

Hereinafter, the configuration of the present invention will be described in detail based on examples of embodiments illustrated in drawings.

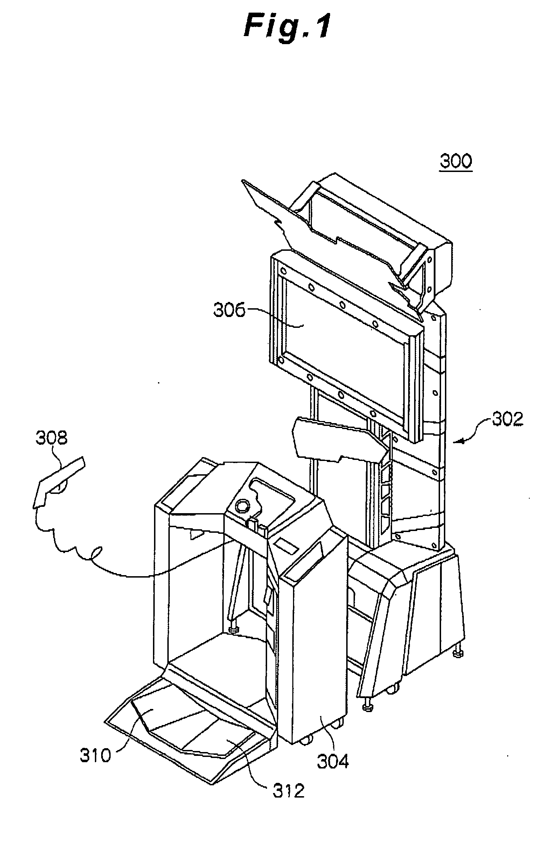

Figs. 1 to 41 illustrate embodiments of the present invention. An electronic play device 300 according to the present invention is so-called an arcade-type gun shooting game device. The electronic play device 300 includes casings 302 and 304 that constitute a device main body, an input device (a gun-type controller 308 and pedal switches 310 and 312), a monitor (display device) 306, and the like, as basic constituent elements thereof (See Fig. 1 and the like).

Hereinafter, the electronic play device 300 according to this embodiment will be described with reference to drawings. Fig. 1 is a perspective view illustrating the whole electronic play device (hereinafter, also referred to as a game device) 300 according to the present invention. The game device (the electronic play device) 300 includes a first casing 302 and a second casing 304. To the upper part of the first casing 302, a monitor 306 is installed. To the second casing 304, a coin insertion slot and a gun-type controller 308 as an operation device are connected. A communication line is drawn out from the gun-type controller 308, and the communication line is connected to the second casing 304. In addition, the entire height of the second casing 304 is smaller than that of the first casing 302, and thus, it is configured that the field of view of a player is not blocked. Inside the first casing 304, a control board of the electronic play device is housed. In addition, pedal switches 310 and 312 as input devices are disposed from a front end of the lower end of the second casing 304 on the player side toward the player. There are left and right pedal switches. By player's individually pushing the left and right pedal switches 310 and 312 by the feet, a character (hereinafter, referred to as a player character) P inside a screen for which a player plays a role can be moved to the left or right side or a special command can be input.

In the above-described game device 300, a player can enjoy a simulated gun battle game by hitting a simulated bullet that has been shot toward an enemy character E displayed on the monitor 306 by pulling a trigger in a state that the player aims the gun-type controller to be faced with the monitor 306 and bring the enemy character E down. The player character P inside the screen for which the player plays a role performs a gun battle with the enemy character E while hiding the body behind various gimmicks (in descriptions here, these are referred to as screening objects G) as shield objects imitating a post, a wall, a drum can, or the like. During the game, when the player pulls the trigger of the gun-type controller 308, an operation signal from the gun-type controller 308 is transmitted to the control board. At this moment, the control board determines whether the enemy character E is shot by a bullet. When the enemy character is shot, an image representation such as bringing the enemy character E down is performed.

Here, the gun-type controller 308 as an input device is formed of a simulated shooting gun such as a handgun, a machine gun, a rifle, or the like that is used for shooting the enemy appearing during the game. In addition, the pedal switches 310 and 312 as input devices are formed of left and right pedals to be pushed by the feet for directing the player character P in the game to perform an action such as moving to the left or right side, jumping aside, or the like or directing an input of a special command.

The gun-type controller 308 is an input device that is held and operated in the hands of the player, and is connected to the control unit 602, for example, through a connection cord and an input-output interface (not illustrated). In addition, together with the gun-type controller 308, a gun aiming position detecting unit 606 that is used for detecting the aiming position of the gun-type controller 308 is disposed. For example, the gun aiming position detecting unit 606 according to this embodiment is configured to include a light receiving element that is disposed in the gun-type controller 308 for reading a scanning spot (a light point of an electronic beam) of the point of impact on the monitor 306. By using the gun aiming position detecting unit 606, it can be determined whether the gun muzzle of the gun-type controller 308 is placed to face the inside of the screen of the monitor 306 or the outside of the screen. In addition, in the gun-type controller 308, a trigger switch that is operated in correspondence with the operation of the trigger of the gun-type controller 308 is disposed. A timing of detecting the scanning spot and a signal of the trigger timing are transmitted to the input-output interface through the connection cord.

The input-output interface of the gun-type controller 308, for example, is connected to the gun-type controller 308. Accordingly, shooting of the gun-type controller 308, the impact place, the number of shots, and the like are determined based on a detection signal of the scanning spot transmitted from the gun-type controller 308, a trigger signal that represents release of the trigger of the gun-type controller 308, the position of the current coordinates (X, Y) of the scanning electronic beam on the monitor 306, and the position of the target, and various flags corresponding thereto are set in predetermined positions inside the RAM.

The pedal switches 310 and 312 are the input devices for directing the operation of the character in the game by being pushed by the player's feet. For example, the pedal switches are connected to the control unit 602 through a connection cord and an input-output interface (not illustrated). In addition, the pedal switches according to this embodiment are configured by the left pedal 310 and the right pedal 312 that are independent pedals located on the right and left sides. These left and right pedal switches 310 and 312 are disposed on the left and right sides with a gap of an approximate shoe width of one foot interposed therebetween, so that the player can push one of the pedals by changing the direction of a toe with a heel of one foot used as an axis (pivot) by the player. However, this is merely one example of disposition of both the pedal switches 310 and 312. Thus, other than that, for example, the left pedal 310 and the right pedal 312 may be disposed to be pushed by the left and right feet. Each of the pedal switches 310 and 312 includes a switch that is shifted in a case where the pedal switch is pushed by the foot and is configured to transmit a signal to the input-output interface in a case where the pedal switch is pushed by the player's foot. In addition, according to this embodiment, another operation (for example, an operation for jumping aside) is configured to be performed for a case where an operation of pushing the pedal switches 310 and 312 twice within a short time period, that is, so-called a double click operation is performed.

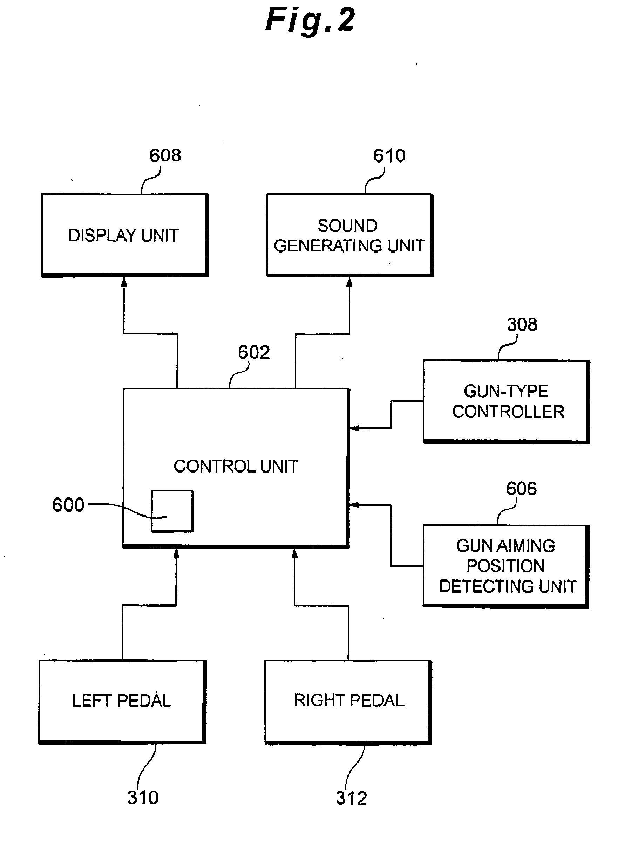

Fig. 2 is a block diagram illustrating the overview of the game device 300. A program data memory unit 600 stores game programs and data needed for processes on the basis of the game programs. The game programs or data is stored in a recording medium such as an optical disc, a hard disk, or a semiconductor memory such as a flash memory. The control unit 602 determines the behavior of the player character P based on an output from a device operated by the player, the game program, and the data stored in the memory unit 600. The operation devices are a trigger 604 of the gun-type controller, the gun aiming position detecting unit 606 that detects the direction (aiming) that the gun-type controller faces, and the left and right pedal switches 310 and 312.

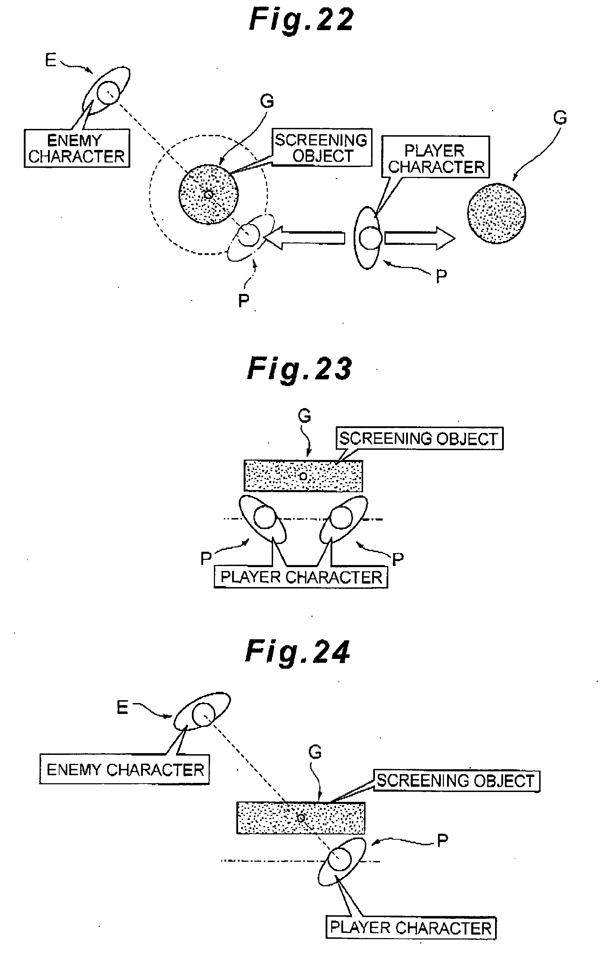

The gun aiming position detecting unit 606 that detects the aiming of the gun-type controller 308 is configured as follows. As illustrated in Fig. 24 of Japanese Patent Application Laid-Open No. 11-86038, a plurality of LEDs is disposed near a display panel and is configured to emit light sequentially. Then, a plurality of light receiving units disposed in a simulation controller receives the light. Then, the control unit 602 analyzes signals from each light receiving unit so as to detect the direction of the gun muzzle of the gun-type controller 308. The control unit 602 determines the position of a virtual view point inside the virtual space based on the game program. Then, the control unit 602 performs a projection transformation process for an image acquired from viewing the virtual space from the position of the virtual view point and displays the transformed image in a display unit 608. In addition, the game program generates various sound effects such as a bullet shooting sound or a hit sound, and generates the sound effects by using a sound generating unit 610.

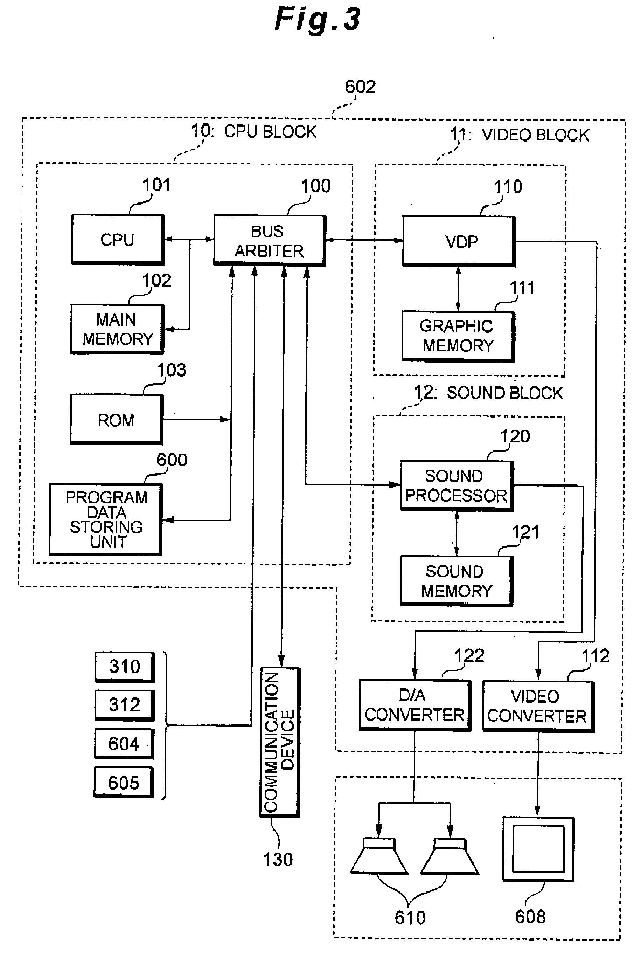

Fig. 3 is a detailed block diagram of the game device 300 illustrated in Fig. 2. The above-described control unit 602 includes a CPU block 10, a video block 11, and a sound block 12. The CPU block 10 is a main body for performing an image process based on the game program and includes a bus arbiter 100, a CPU 101, a main memory 102, a ROM 103, and a program data memory unit 600. The bus arbiter 100 is configured to be able to control data reception and data transmission by assigning a bus occupying time period to a device that is interconnected with the arbiter through a bus.

The CPU 101 serving as a control device transfers program data for an operating system stored in the game program data memory unit 600 to the main memory 102 by executing an initial program (initial execution program) that is stored in the ROM 103 at a time when the power is turned on. Thereafter, the CPU 101 is operated in accordance with the operating system. Thus, the CPU continuously transfers the application program data stored in the program data memory unit to the main memory 102 and executes the program. In addition, the CPU 101 is configured to be able to transfer image data to a graphic memory 111 and transfer voice data to a sound memory 121. The processes performed by the CPU 101 in accordance with the program data are mainly an input of an operation signal from an operation device 107 and analysis of communication data from the communication device 130 and an image process directed to the video block 11 and a voice process directed to the sound block 12, based thereon.

The main memory 102, in addition to mainly storing the above-described program data for the operating system and the application program data, provides a work area in which a static variable, a dynamic variable, or the like is stored to the CPU. The ROM 103 is an area in which an initial program loader is stored.

In the program data memory unit, program data for enabling the game device 300 to perform a predetermined image processing method, image data for displaying an image, voice data for outputting voice, and the like are stored. For example, in this embodiment, shape data (in particular, for example, an object such as the enemy character E and three-dimensional data such as a game background including a landscape, a building, the inside of a house, a subway, or the like) relating to a game and the like are stored. In addition, the game device 300 can enable the player character P to fight against an enemy character E operated by a match-up player as a match-up opponent in a common virtual three-dimensional space by exchanging data with another game device through the communication device 130. When there is no match-up player, the enemy character E is operated by the CPU 101.

The operation device 107 outputs an operation signal corresponding to the state of a gamer's operation performed by a player for the operation button or the like to a bus of the CPU block 10. The video block 11 includes a VDP (Video Display Processor) 110, a graphic memory 111, and a video converter 112. In the graphic memory 111, as described above, the image data read out from the program data memory unit is stored.

The VDP 110 is configured to read image data needed for image display from the image data stored in the graphic memory 111 and perform coordinate transformation (geometry calculation), a texture mapping process, a display prioritizing process, a shading process, or the like in accordance with data needed for image display which is supplied from the CPU 101, that is, command data, view point position data, light source position data, object designating data, object position data, texture designating data, texture density data, field of sight converting matrix data, or the like.

In addition, the above-described processes such as the coordinate transformation may be configured to be performed by the CPU 101, In other words, a process is assigned to a specific device in consideration of calculation capability of each device. The video converter 112 is configured to convert the image data generated by the VDP 110 into a predetermined television signal in an NTSC mode or the like and output the television signal to the monitor 306 that is connected externally.

The sound block 12 includes a sound processor 120, a sound memory 121, and a D/A converter 122. In the sound memory 121, as described above, the voice data read out from the CD-ROM is stored. The sound processor 120 is configured to read out the voice data such as waveform data stored in the memory 121 and perform various effect processes on the basis of a DSP (Digital Signal Processor) function, a digital/analog conversion process, and the like based on the command data supplied from the CPU 101. Then, the D/A converter 122 is configured to be able to convert the voice data generated by a sound processor 120 into an analog signal and output the analog signal to a speaker 5 that is connected externally.

Next, the flow of a game will be described with the content of the game device 300 according to this embodiment before a virtual gun fight exemplified.

In this embodiment, a one-to-one gun battle between a character (the player character P) operated by the player and a character (the enemy character E) that is an enemy is virtually played. In such a case, the operation of the enemy character E is controlled by the CPU in a player's single play mode (for example, a story mode in which a represented story and a mission, under which a virtual gun battle is played, are alternately displayed). On the other hand, the enemy character is operated in accordance with an operation of the other player in a mode (the match-up mode) in which two players play a battle. In addition, in the story mode, each time an enemy character E is brought down so as to proceed to the next stage, a deployment in which another enemy character E as a stronger enemy appears can be used.

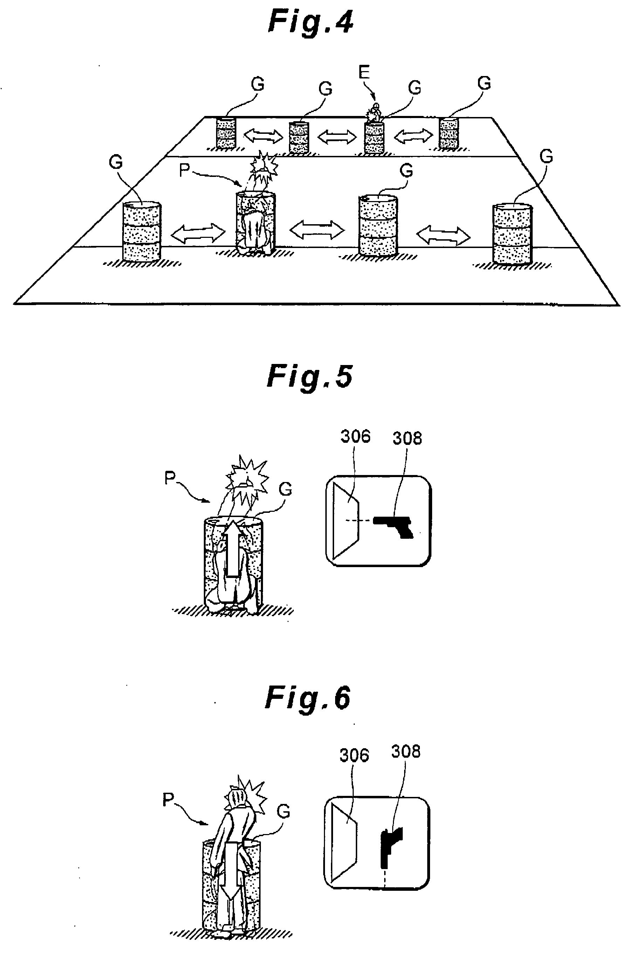

In addition, according to the game device 300 of to this embodiment, in a field in which the virtual gun battle is deployed, the player character P is configured to be moved to the left or right side within a movement area that is located on the front side of the screen, and the enemy character E is configured to be moved to the left or right side within a movement area that is located on the inner side of the screen (see Fig. 4). In addition, in each movement area, an object for hiding each character's body so as not to be attacked by the other character is disposed. For example, in this embodiment, a plurality of (for example, two to four) screening objects G that are formed of gimmicks such as a drum can and a post are disposed in each movement area (see Fig. 4).

In addition, according to this embodiment, the player character P in a hiding state behind the screening object G is programmed to be shifted between a shooting posture (attack posture) and a non-shooting posture (defense posture) in accordance with the direction of the gun-type controller 308 held in the hands of the player (see Figs. 5 and 6). In other words, for a state that the gun muzzle of the gun-type controller 308 faces the inside of the screen of the monitor 306, the player character takes a shooting posture in which the gun muzzle faces the enemy character E (Fig. 5). On the other hand, for a state that the gun muzzle of the gun-type controller 308 faces the outside of the screen of the monitor 306, the player character takes a non-shooting posture in which the body is hidden behind the shape of the screening object G (Fig. 6). In the non-shooting posture located behind the screening object G, basically the player character P is in a state completely hidden by the shadow of the screening object G. Thus, in the state, unless the screening object G is destroyed, there is no case that the player character is shot by the enemy character E (Fig. 5). On the other hand, in the shooting posture, the player character is in a posture that a part of the body (for example, an upper body, a left-half or right-half body, or the like) of the player character P is exposed from the shadow of the screening object G. Thus, the player character is in a state that the player character can shoot and can be damaged by being shot by the enemy character E (Fig. 6).

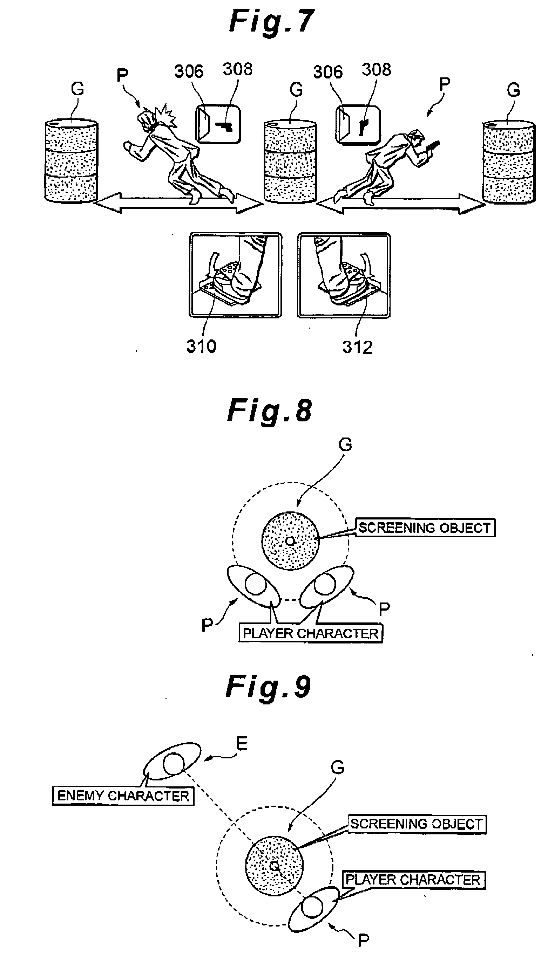

In addition, according to this embodiment, the player character P can be moved to the left or right side by player's operating the pedal switches 310 and 312 by using the feet (see Fig. 7). In particular, the player character P can be moved to the left side on the screen by player's pushing the left pedal 310 and can be moved to the right side on the screen by player's pushing the right pedal 312. In addition, when the pedal switch 310 or 312 for the reverse direction is pushed by using the foot during movement of the player character in one direction, the moving direction is reversed, and the player character can be moved in the directed direction. In addition, in moving the player character to the left or right side, when the gun muzzle of the gun-type controller 308 faces the inside of the screen of the monitor 306, the player character P moves in the shooting posture (aimed movement). On the other hand, when the gun muzzle of the gun-type controller 308 faces the outside of the screen of the monitor 306, the player character moves in the non-shooting posture (defensive movement).

In addition, the progress and result of a virtual gun battle between the player character P and the enemy character E and the shooting capability of the player can be quantified to be displayed, for example, as follows. Various elements such as physical strength, shooting capability, and agility are quantified and set depending on the type of the enemy character E, and damage points corresponding to hit points of a head part, a body part, hands, and legs of each character are set in advance. A character hit by a bullet on each hit point receives damage corresponding to the hit point, and corresponding points are subtracted from the strength point. While a virtual gun battle is played, the strength point that is displayed in a strip-like shape inside the screen (for example, an upper left part of the screen) all the time is calculated each time the character is hit by a bullet (a bullet lands in the character), and is displayed as the total remaining strength. When the strength point is equal to or smaller than a predetermined value, a corresponding character (the player character P or the enemy character E) falls down on the screen and is treated as a defeated character. In addition, by using the above-described strength point and the like, the shooting capability of the player that is determined based on what type of the enemy is brought down within a predetermined time and/or how many enemy characters E are brought down within a predetermined time can be represented quantitatively.

In addition, in the above-described quantifying technique for a simulated gun battle, additionally, the damage points corresponding to the hit points can be set differently, as in a case where the damage point is set high for a case that the head part is hit by a bullet and set low for a case that any other point is hit by a bullet. In addition, points (strength values) may be set and calculated for each spot such as a hand or a leg, and a process and a representation that are for breaking up a part from the other parts for a case where the point corresponding to the part is equal to or smaller than a predetermined value can be performed. In the game device 300 according to this embodiment, the strength point can be set in a wide variety of ways as described above. For example, settings and representations in which a strength point is configured to be easily decreased for a specific enemy character E (a specific enemy character is configured to be easily brought down) by setting the width of decrease in the strength point to be large, the areas of the hit points to be large, or the like and a strong enemy character cannot be easily brought down by being hit by a bullet several times can be performed.

In addition, the game device 300 according to this embodiment has a same reload function as that of a conventional device. The reload function simulates a real shooting gun by arranging an upper limit of the number of loaded simulated bullets of the gun-type controller 308 and requiring an operation for loading (reloading) bullets in the middle of a simulated shooting operation. For example, in this embodiment, a representation in which simulated bullets are automatically loaded in a case where the gun muzzle of the gun-type controller 308 faces the outside of the screen of the monitor 306 is performed. The number of remaining simulated bullets is represented by the number of pictures imitating bullets inside the screen of the monitor 306 (for example, on a side lower than the stripe-like shaped strength point represented in the upper-left part of the above-described screen). In addition, when the number of the remaining simulated bullets is equal to or smaller than a predetermined value or is zero (a state out of the bullet), it is warned by displaying a text of "RELOAD" inside the screen or the like.

Here, in the game device 300 according to this embodiment, control (movement control) for setting a movement destination for a moving operation of each character (the player character P and the enemy character E) is performed based on the position relationship between the opponent character and the above-described screening object G. In particular, for example, when the player directs the player character P to move by pushing the pedal switches 310 and 312 by using the feet (when movement is input), basically a position in which the player character can avoid direct shoot up from the enemy character E by hiding in the shadow of a nearest screening object G in the movement direction is set as the movement destination (see Fig. 9). As described above, as the position for the player character to hide in the shadow of the screening object G, a position located on the left side or the right side of the screening object G may be selected (see Fig. 8). However, according to this embodiment, the position of the enemy character E is considered in addition to the position of the screening object G, and a position (a position in which the player character P hides in the shadow of the screening object G, viewed from the enemy character E) located on the opposite side of the enemy character E with the screening object G interposed therebetween is selected as the movement destination. In addition, although the above-described control is for a case where the player directs the player character P to move, even in a case where the enemy character E moves, a same movement control as described above is performed based on the position relationship between the opponent character (in this case, the player character P) and the screening object G.

In the above-described movement control, the movement destination of each character can be designated by coordinates. For example, when the coordinate values of the movement destination of a character is set, the character can be moved to the movement destination by adding a difference to the coordinate values at the current time point. The coordinate values of each screening object G or the like can be acquired by referring to a coordinate table (map).

In addition, when the player performs movement input (pushes the pedal switch 310 or 312 by using the foot) while the enemy character E is moving, various movement control processes can be considered. For example, in this embodiment, a position in which the player character P can hide in the shadow of the screening object G, viewed from the enemy character E, with reference to the position of the enemy character E at a time point when the player performs the movement input is set as a movement destination. In other words, in this embodiment, the movement control process is performed in consideration of only the position of the enemy character E regardless of the state of the enemy character E (for example, the shooting posture, the non-shooting posture, or the like). In addition, similarly at a time point when the player character P receives damage or at a time when the player character jumps aside, the movement destination is simply set based on only the coordinate values at the time point.

In addition, when a movement input for moving back in the reverse direction is performed in the middle of movement of the player character P (that is, when the pedal switch 310 or 312 on the opposite side of the movement direction is pushed by using the foot), as the content of the movement control process, a simple control process of returning the player character to the original position or the like can be made. However, in this embodiment, the movement destination is recalculated to be set. In other words, when there is a movement input for moving the player character in the reverse direction (returning direction) in the middle of the movement of the player character, the movement destination is set based on the position of a nearest screening object G in the returning direction and the position of the enemy character E at that time point.

In addition, according to this embodiment, the moving operation is differently set for the shooting posture and the non-shooting posture (see Fig. 7). In other words, when the gun muzzle of the gun-type controller 308 is faced with the inside of the screen of the monitor 306 in the middle of movement of the player character P, the player character can be moved in the shooting posture (aimed movement). In such a case, although shooting can be made while the player character moves, the speed of movement is regular or relatively low. In addition, when the player character is shot by the gun shot of the enemy character E in this state, the player character receives relatively much damage. On the other hand, when the gun muzzle of the gun-type controller 308 is faced with the outside of the screen of the monitor 306 in the middle of movement of the player character P, the player character moves in the non-shooting posture (defensive movement). In such a case, although shooting cannot be made while the player character is moving, the speed of movement is relatively high. In addition, when the player character is shot by a bullet in this state, damage is smaller than that in the shooting posture (for example, a half of the damage received in the shooting posture). In addition, the aimed movement and the defensive movement can be alternately changed depending on whether the gun muzzle of the gun-type controller 308 is faced with the inside of the screen. In addition, according to this embodiment, when transition from the aimed movement to the defensive movement is made (when the gun muzzle of the gun-type controller 308 is faced with the outside of the screen), reload, that is, load of the simulated bullets of the gun-type controller 308 is automatically performed.

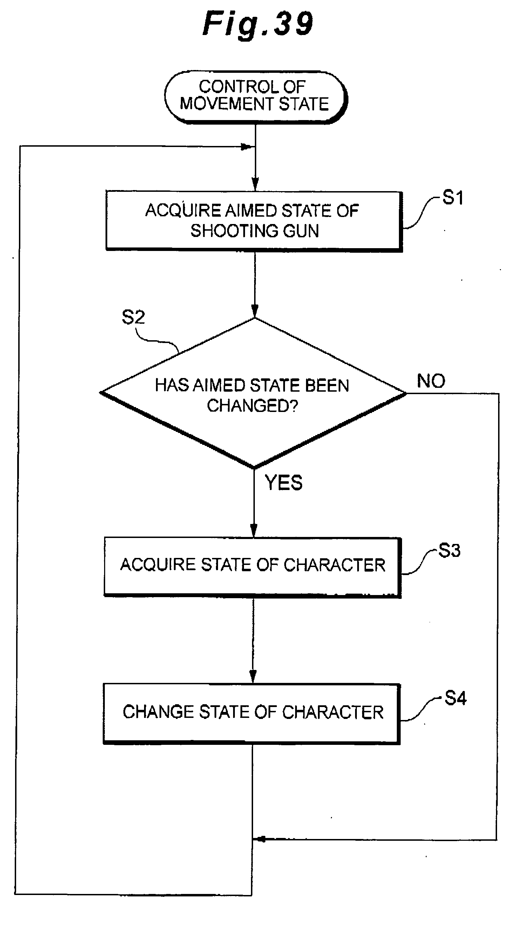

The control process of the moving operation described above (control process of the aimed movement and the defensive movement) will be simply described by using a flow representing only a part of a looping process as below (see Fig. 39). The aimed state of the gun-type controller 308 is acquired (Step S1), and it is determined whether the aimed state is changed (Step S2). When the state is changed, the state of the character (the player character P) is acquired (Step S3), and the state of the character is updated (Step S4). In particular, the above-described aimed movement is changed to the defensive movement, and the defensive movement is changed to the aimed movement. When the state of the character is changed as described above or the aimed state is not changed in Step S2, the process is looped to Step S1, and the aimed state of the gun-type controller 308 is acquired again (see Fig. 39). In addition, although a looping process is simply represented here, a flow in which terminal markings for starting and ending are arranged and the process is restarted each time a predetermined time (for example, 1/60 second) elapses after completion of a series of processes may be used for implementing the above-described process.

Here, the above-described movement control process will be described in detail as follows with an example of a detailed shape of the screening object G.

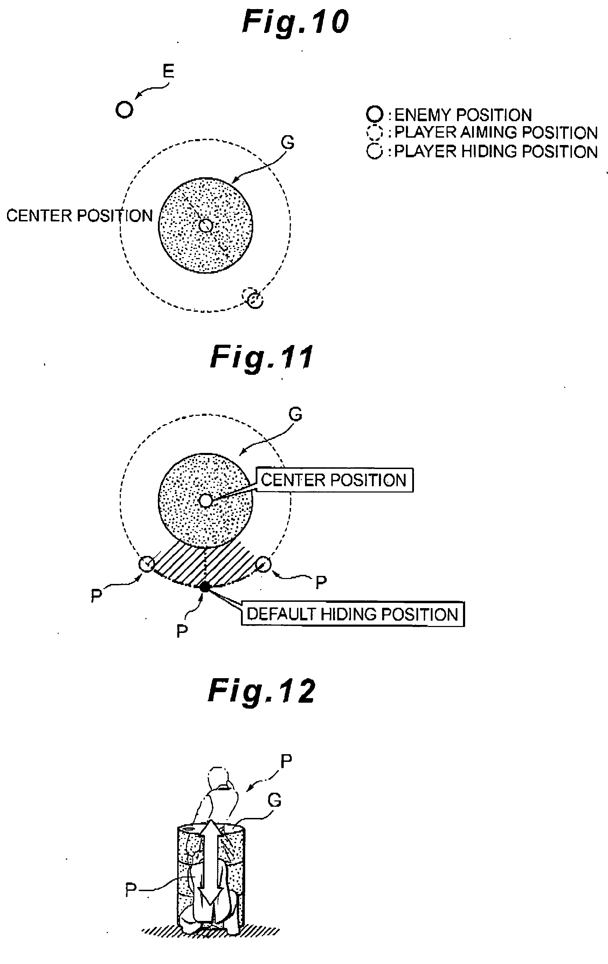

First, for example, when the screening object G is a circular cylindrical shape formed of a gimmick of a drum can (see Fig. 12), default of a position (a position in which the body can be hidden from the gun shot of the enemy character E) in which the player character P hides is right behind the screening object G, and, for example, a fan-shaped area extending by left and right 45 degrees (a total of 90 degrees) from the default hiding position as its center is set as the hiding position (see Fig. 11). The movement destination of the player character P is inside the fan-shaped area (in particular, on the circumference having a predetermined distance from the screening object G) and is set to a position on an extended line connecting the position of the enemy character E and the center of the screening object G (see Fig. 10). In addition, in a case where the body of the player character P cannot be hidden in the shadow of the screening object G from the view of the enemy character E, an end-part position of the above-described fan-shaped area becomes the movement destination (hiding position). In addition, when the screening object G is a drum can having a height smaller than that of the player character P, as in this embodiment, the player character P takes the non-shooting posture in a state that the player character crouches down in the shadow of the drum can and takes the shooting posture in a state that the player character stands and exposes its upper body to an upper part of the drum can (see Fig. 12). Accordingly, in this embodiment, the position (the aimed position) in the shooting posture and the position (hiding position) in the non-shooting posture that are represented in Fig. 10 are not different from each other (see Fig. 10).

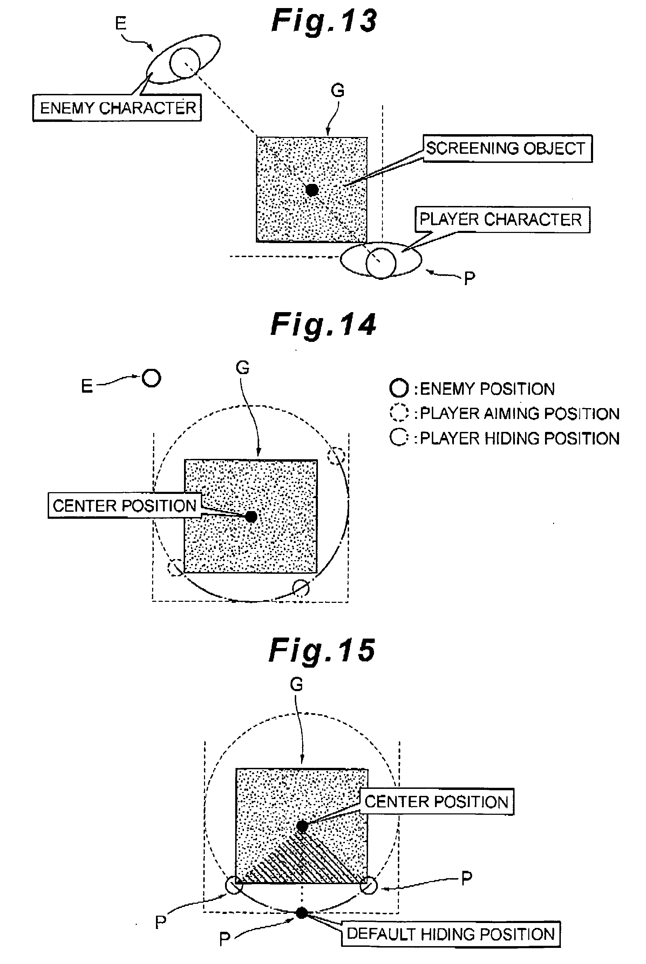

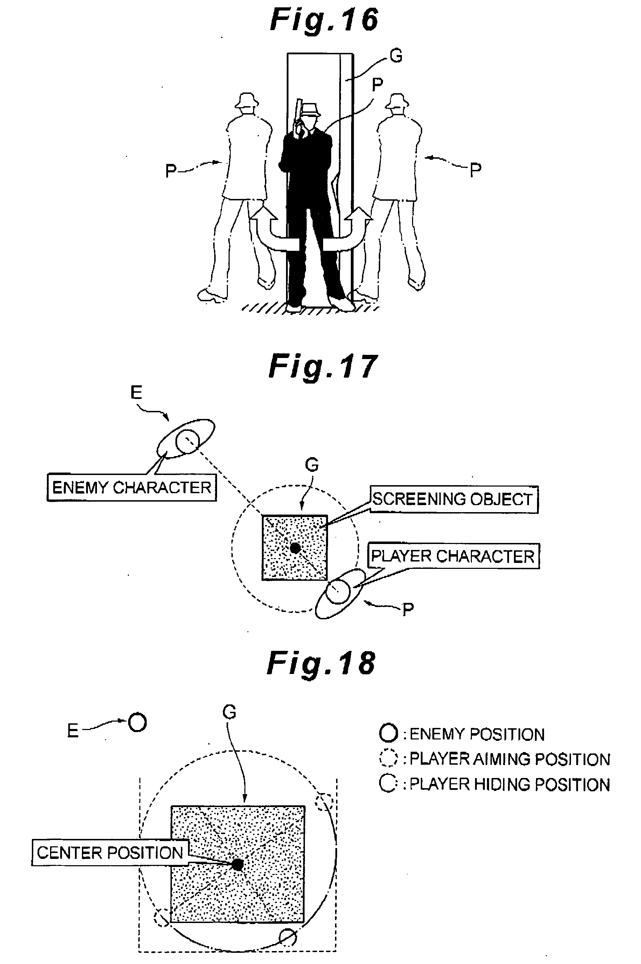

Next, for example, when the screening object G is a rectangular shape such as a post, (see Fig. 13), default of a position (a position in which the body can be hidden from the gun shot of the enemy character E) in which the player character P hides is right behind the screening object G, and, for example, a fan-shaped area (actually, an area acquired by excluding a triangular part from the fan-shaped area as illustrated in the figure) extending by left and right 45 degrees (a total of 90 degrees) from the default hiding position as its center is set as the hiding position (see Fig. 15). The movement destination of the player character P is inside the fan-shaped area (in particular, on the circumference having a predetermined distance from the screening object G) and is set to a position on an extended line connecting the position of the enemy character E and the center of the screening object G (see Fig. 10). In addition, in a case where the body of the player character P cannot be hidden in the shadow of the screening object G from the view of the enemy character E, an end-part position of the above-described area becomes the movement destination (hiding position). In addition, when the screening object G is a post, as in this embodiment, the player character P takes the non-shooting posture in the shadow of the post and takes the shooting posture by popping out to positions in the left and right 90 degrees from the position (see Figs. 14 and 16). Accordingly, in this embodiment, the position (the aimed position) in the shooting posture and the position (hiding position) in the non-shooting posture that are represented in Fig. 14 are not different from each other (see Fig. 14).

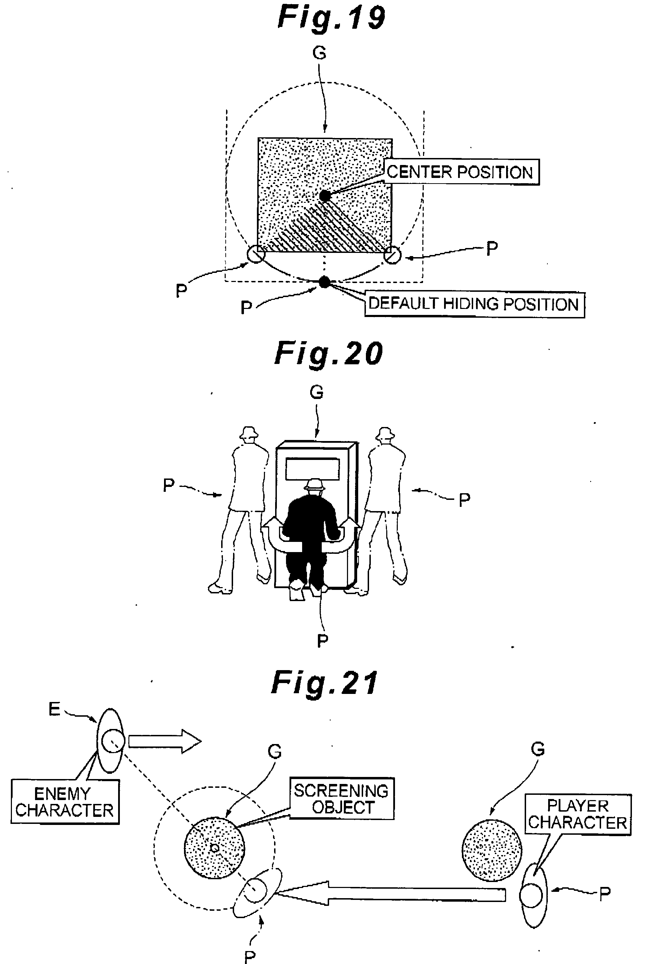

Subsequently, when the screening object G is a rectangular shape such as a tanker and has a height smaller than that of the player character P (see Fig. 20), default of a position (a position in which the body can be hidden from the gun shot of the enemy character E) in which the player character P hides is right behind the screening object G, and, for example, a fan-shaped area (actually, an area acquired by excluding a triangular part from the fan-shaped area as illustrated in the figure) extending by left and right 45 degrees (a total of 90 degrees) from the default hiding position as its center is set as the hiding position (see Fig. 19). The movement destination of the player character P is inside the fan-shaped area (in particular, on the circumference having a predetermined distance from the screening object G) and is set to a position on an extended line connecting the position of the enemy character E and the center of the screening object G (see Figs. 17 and 18). In addition, in a case where the body of the player character P cannot be hidden in the shadow of the screening object G from the view of the enemy character E, an end-part position of the above-described area becomes the movement destination (hiding position). In addition, when the screening object G is a tanker, as in this embodiment, the player character P takes the non-shooting posture in a state that the player character crouches down in the shadow of the tanker and takes the shooting posture in a state that the player character pops out to positions of the left and right 90 degrees from the position and stands (see Figs. 18 and 20). Accordingly, in this embodiment, the position (the aimed position) in the shooting posture and the position (hiding position) in the non-shooting posture that are represented in Fig. 18 are different from each other (see Fig. 18).

As is apparent from the above-described description, when the player performs a movement input for the player character P that hides in a screening object G, the player character P moves toward a position (hiding position) in which the player character can hide in the shadow of the nearest screening object G in the movement direction (see Fig. 21). At that moment, as described above, the movement destination is set to a position that is inside an area such as the fan shape located in the shadow of the screening object G and is located on an extended line that connects the position of the enemy character E and the center of the screening object G (see Fig. 21). In addition, for example, when the movement input for the reverse direction (to the left side) while the player character is moving to the right side, the player character P is moved toward a position (hiding position) in which the player character can hide in the shadow of the screening object G located in the reverse direction (returning direction) (see Fig. 22). At that moment, the control unit 602 according to this embodiment, as described above, sets the coordinates of the movement destination by performing a recalculation process. In addition, when the character receives damage in the hiding position, a process in which the default hiding place or the actually hiding place of the character is slowly shifted to a position, in which the character is not visible from the enemy, may be added. In addition, the above-described center of the screening object G is only an example of a position that becomes a reference point, and another position may be used as the reference point.

In addition, for example, even when the screening object G has a shape that is long and thin in the movement direction as illustrated in Fig. 23, the control process can be performed as described above. In such a case, as represented in the figure, it may be configured that a line parallel to the movement direction is set on the rear side of the screening object G and the movement destination of the character is set on the line (see Fig. 23). The actual movement destination is on this line, and is set to a position on an extended line that connects the position of the enemy character E and the center of the screening object G (see Fig. 24).

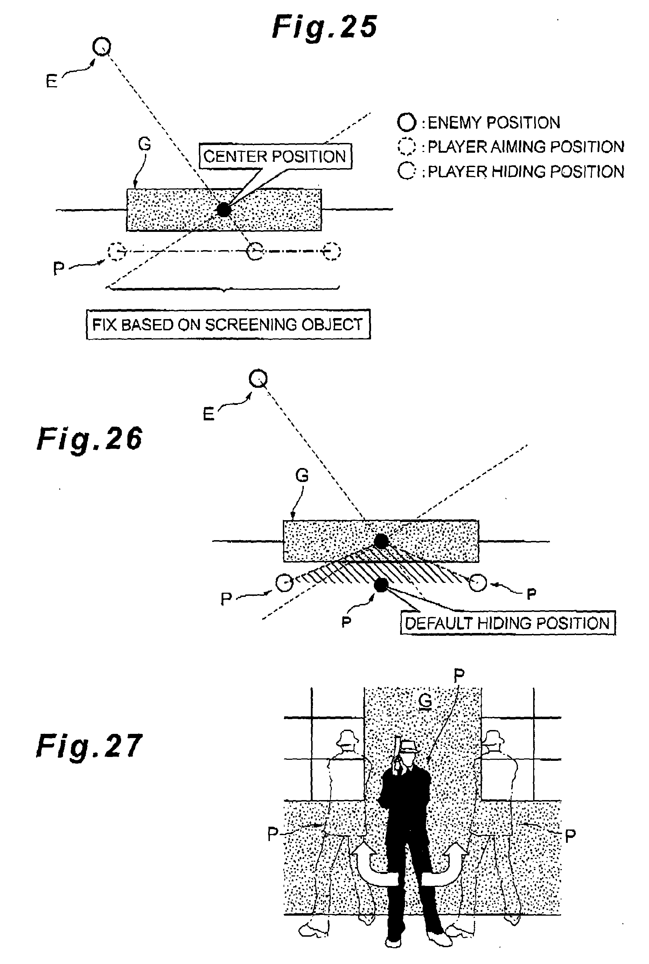

Here, as described above, a concrete embodiment for a case where the screening object G has a thin and long shape (for example, a wall between windows) described above will be also described (see Figs. 25 to 27 and the like). The default of a position (a position in which the body can be hidden from the gun shot of the enemy character E) in which the player character P hides is a center position right behind the screening object G and, for example, a triangle-shaped area extending by left and right 60 degrees (a total of 120 degrees) from the default hiding position as its center is set as the hiding position (see Fig. 26). The movement destination of the player character P is inside the triangle-shaped area and is set to a position on an extended line connecting the position of the enemy character E and the center of the screening object G (see Figs. 25 and 26). In addition, in this embodiment in which the screening object G is the wall between the windows, the player character P takes the non-shooting posture in the shadow of the wall, and takes the shooting posture by popping out to the left or right side from the position (see Figs. 25 and 27). Accordingly, also in this embodiment, the position (the aimed position) in the shooting posture and the position (hiding position) in the non-shooting posture that are represented in Fig. 25 are not different from each other (see Fig. 25).

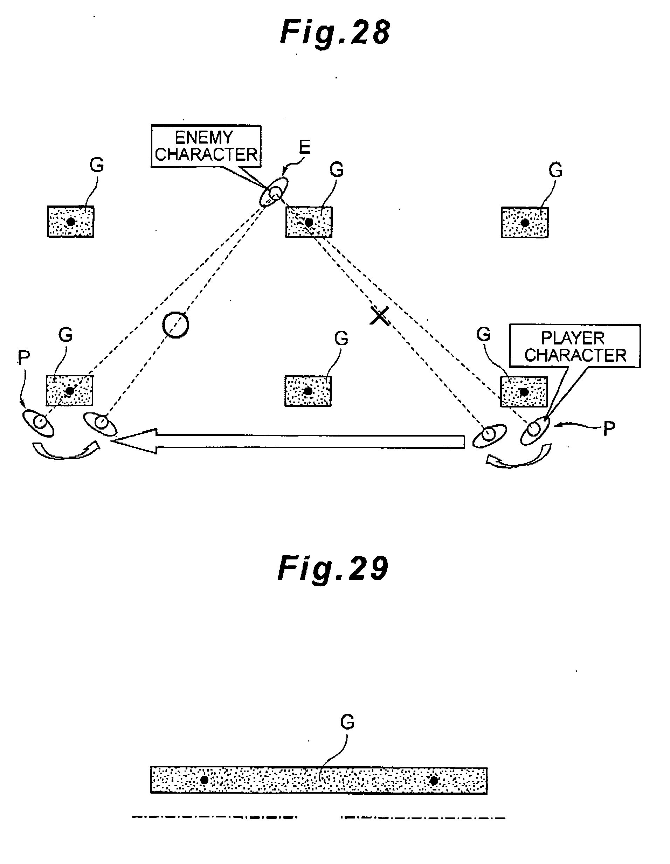

As described above, the game device 300 according to this embodiment is automatically controlled such that the movement destination to which each character (the player character P and the enemy character E) is moved becomes the shadow of the screening object G. In addition, when the gun muzzle of the gun-type controller 308 is faced with the outside of the screen, the character is configured to take the non-shooting posture in the hiding position. On the other hand, when the gun muzzle of the gun-type controller 308 is faced with the inside of the screen, the character can take the shooting posture in an aimed position protruding from the shadow of the screening object G (axis movement). In addition, by player's operating the left and right pedal switches 310 and 312, the player character P can be moved from the shadow of one screening object G to the shadow of another screening object G (see Fig. 28). In such a case, from the view point of the player character P in the hiding position, the enemy character E cannot be easily seen also from the hiding side. In addition, by moving the player character to the aimed position (taking the shooting posture), the player character can be transited to a position (in other words, a position in which shooting can be easily made) in which the enemy character E can be easily seen (see reference sign o represented in Fig. 28). This is the same from the view point of the enemy character E (for example, see reference sign x represented in Fig. 28). The main point is that, in the game device 300 according to this embodiment, shooting from the enemy character E cannot be easily received to be in a relatively safe state in a case where the player character hides in the shadow of the screening object G (unless the screening object G is destroyed). On the other hand, in a case where the player character pops out once to the aimed position, the player character can shoot the enemy character E, and the possibility that the player character is shot by a bullet becomes high. Accordingly, a thrilling simulated gun fighting, having high amusement, in which attack and defense can be made by using high-level tactics can be enjoyed.

In addition, since the movement of the player character P to the left or right side is based on the operation of the pedal switches 310 and 312, the player can basically move the player character P on his intention. However, for a representation of a shooting game, an operation for causing movement may be provided. Although not described in detail in this embodiment, for example, when an endurance value of each screening object G for stray bullets is set and a representation in which the screening object G is slowly broken to be finally exploded or crushed is performed, the player who wants to reduce damage of the player character P may be motivated to move the player character to the left or right side.

In addition, in the above-described embodiment, a case where the screening object G has a thin and long shape is exemplified (see Fig. 23 and the like). However, in a case where the screening object G has a shape longer in the movement direction, a plurality of hiding places may be set. For example, for a screening object G having a thin and long shape as represented in Fig. 29, two default hiding positions are set in this embodiment, and a hiding position located on a closer side viewed from the character is set as the movement destination in the movement control process.

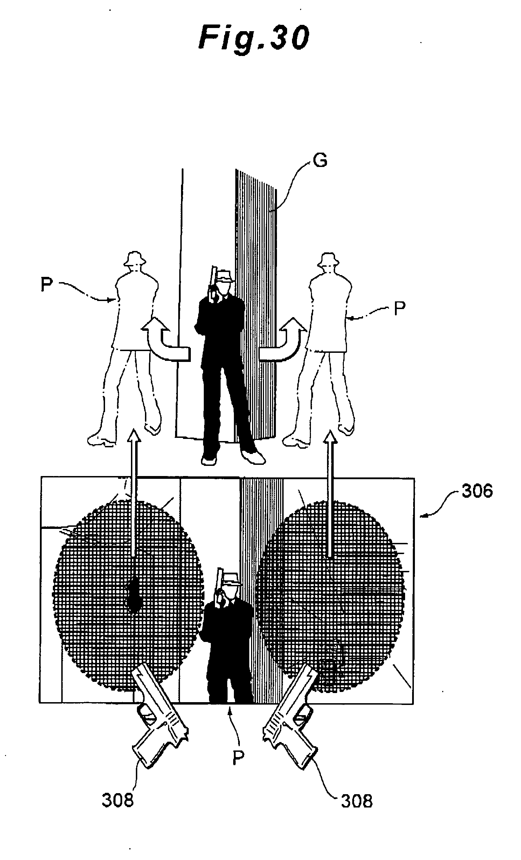

Subsequently, basic actions (movements) of each character (the player character P and the enemy character E) in the game device 300 according to this embodiment, including the above-described movement control process will be described with examples of more detailed screens and objects (see Figs. 30 to 34).

### [Aiming]

In the hiding position located in the shadow of the post-shaped screening object G, while the player places the gun-type controller 308 to face the outside of the screen of the monitor 306, the player character P, as described above, takes the non-shooting posture in which the player character hides its body in the shadow (see Fig. 30). Here, when the player places the gun muzzle of the gun-type controller 308 to face the left (right) side of the screen, that is, for example, the inside of a frame of a broken line located on the left (right) side of the screening object G, the player character P pops out to the aimed position located on the left (right) side of the screening object G and takes the shooting posture. As described above, in the game device 300 according to this embodiment, to which side between the aimed positions located on the left and right sides of the screening object G the player character pops out so as to take the shooting posture can be selected by the position of the gun muzzle facing the screen of the monitor 306 (aiming). In addition, the description above corresponds to a screening object G for which any side between the left and right aimed positions can be selected. Thus, for a screening object G having a shape from which the player character cannot pop out, for example, to the left (right) side, the above-described aiming cannot be performed, and the character should pop out to only one side:

### [Running]

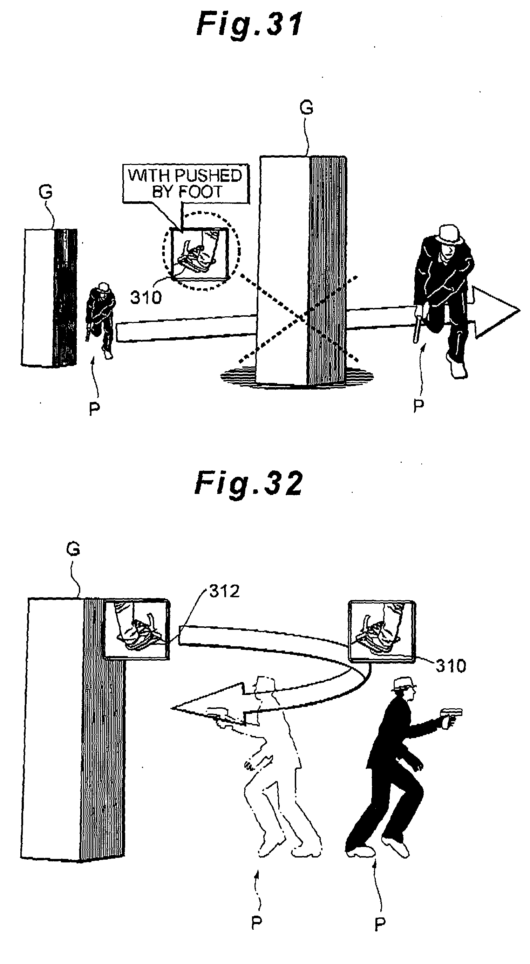

When the player continues to push the pedal switches 310 and 312 by using the feet, the character runs and moves further without stopping at the nearest screening object G (see Fig. 31). Then, when the feet pushing the pedal switches 310 and 312 are lifted, the character basically moves to the shadow of a nearest screening object G in the movement direction.

### [Turning Back]

When the player pushes the pedal switch 310 or 312 for the reverse direction by using the foot while the character is moving, the character turns back (see Fig. 32).

### [Plunging Body Aside]

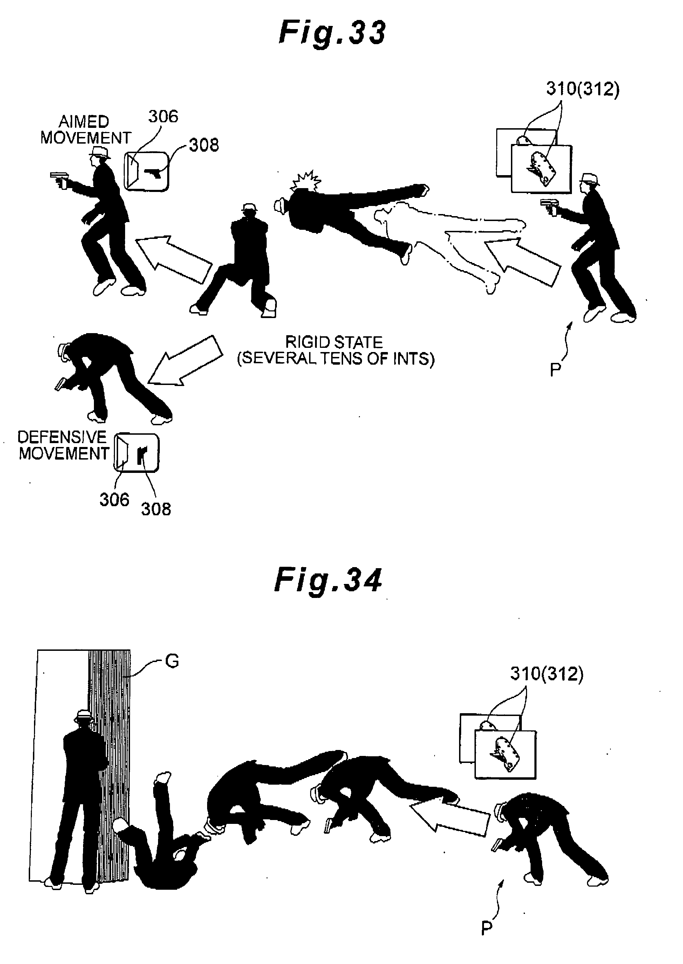

When the player performs so-called a double click (or double pedal), that is, continuously pushing the pedal switch 310 or 312 twice in the middle of the aimed movement (movement to the left or right side in the shooting posture) in a short time, the player character P performs an operation of jumping aside (see Fig. 33). The character in the middle of the operation of jumping aside ignores a screening object G even in a case where the screening object G exists in the middle of the movement and continues the operation of jumping aside. In addition, when the trigger of the gun-type controller 308 is pulled in the middle of the operation of jumping aside, the character can perform gun shooting (jumping aside shot). For example, in this embodiment, the attack power (destruction power) of the jumping aside shot is increased, for example, to be twice that for a normal case. The above-described operation of jumping aside is technology of a high level requiring the player to perform a series of agile operations. Thus, in this embodiment, a representation in which a privilege of increasing the attack power (destruction power) is acquired is performed in a case where the operation of jumping aide is accomplished. In addition, it is preferable that the character after the special operation is set to be in a weak state. In such a case, a high-skilled person who has mastered the operation of the game device 300 comes to hesitate overissuing the special operation for which the privilege is added, and accordingly, the person can improve tactics of the shooting game further. For example, in this embodiment, a representation of a rigid state for several tens of "ints" after the character jumping aside lands is performed ("int" is an abbreviation of interrupt and represents the number of interrupts or the number of rewriting operations for the screen. 1 int = 60 frames / sec, 2 ints = 30 frames / sec), so that the player character P cannot shoot the gun in the rigid state. Thus, according to the game device 300 of this embodiment, the jumping aside shot exhibits an aspect of so-called double edged sword-like technology in which large damage can be given to the enemy character and the character has a high risk for receiving large damage. Accordingly, the amusement of the game is improved. The character after the rigid state is cancelled basically moves in the direction in which the character has jumped aside. However, when the character performs the operation of jumping aside in both end parts of a movement area in which the character can be moved, the character turns back and moves to the nearest hiding position. In addition, in Fig. 33, as movement after release of the rigidity, both the aimed movement in the shooting posture and the defensive movement in the non-shooting posture are represented (see Fig. 33).

### [Avoiding]

When the double click (double pedal) for the pedal switch 310 or 312 is performed during the defensive movement, the character performs an avoiding operation (see Fig. 34). In the avoiding operation, damage received from a hit by a bullet decreases, compared to a normal case (for example, 1/4 of damage of a normal case). In addition, when the avoiding operation is performed, the character is configured to jump in a nearest screening object G to be automatically in a hiding state (see Fig. 34). In addition, how far the character jumps in the above-described avoiding operation can be set in various manners. In addition, the operation can be performed in a smooth manner by reproducing a quick hiding motion, for example, in a case where the character performs the avoiding operation in a position close to a screening object G or transiting the character to the defensive movement after completion of the jumping operation in an opposite case where the character jumps in by performing the avoiding operation and does not reach the screening object G.

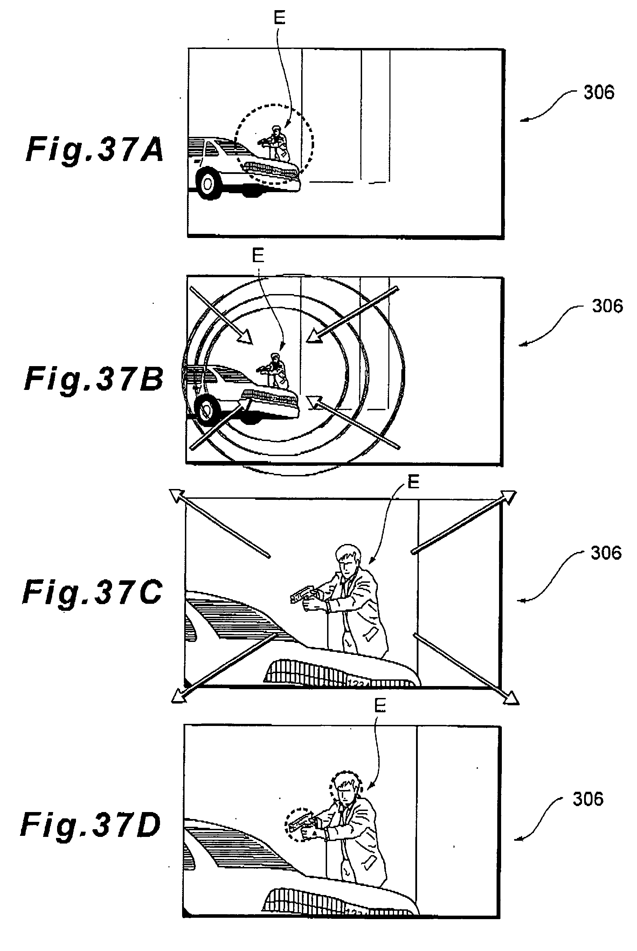

Subsequently, a zoom control function of the game device 300 according to this embodiment will be described (see Fig. 37 and the like). The zoom control is to zoom (display on an enlarged scale) the screen in a case where the player performs an aiming operation that satisfies a predetermined condition. For example, a representation such as improving the precision of shooting by zooming the abdomen or the like of the enemy character E or changing damage for a case where the attack power is up and shooting succeeds can be performed. By performing the above-described zoom control in addition to the above-described movement control, the amusement of the game can be improved further.

Here, in this embodiment, two types of zoom control including normal zoom (concentrate zoom) and quick zoom are performed. Hereinafter, the overview of three-dimensional virtualization technology in the game device 300 will be described, and then, the condition and content of the zoom function will be described.

The three-dimensional virtualization technology is for disposing characters (the player character P and the enemy character E) inside a virtual space formed as a three-dimension, performing projection transformation for the characters onto a video viewed from a virtual view point, and displaying the video in a display. The virtual view point is a view point from a virtual camera that is defined inside the three-dimensional virtual space. In addition, the game device 300 according to this embodiment is configured to be shifted between two types of view points including a view point (first person point of view) that simulates the view point of the player character P and a view point (third person point of view) that simulates a view point from which both the player character P and the enemy character E can be visually recognized. In the first person point of view, an image having realistic sensation viewed from the player character P is projected on the screen, and accordingly, the player can enjoy a simulated gun fighting as if the player is the same body as the player character P. On the other hand, in the third person point of view, a field in which a simulated gun fighting is played is projected including the player character P, and accordingly, the player can easily acquire the entire appearance and surrounding situation. The above-described image process is implemented by performing process control by using a device for processing an image (image processing device) that is constituted by the control unit 602, the above-described image composing device, and the like.

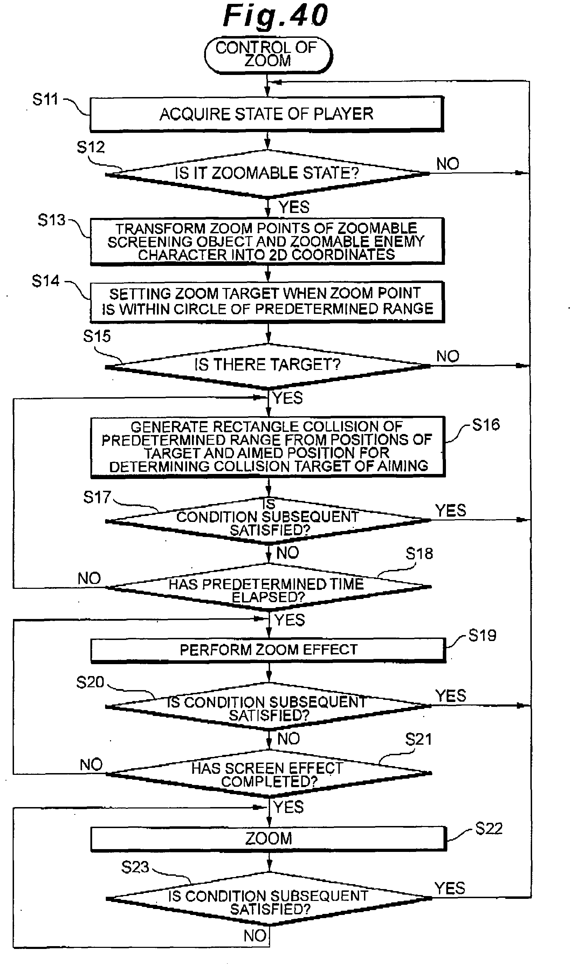

Subsequently, the condition and content of the zoom function will be described. First, the normal zoom is performed on a condition that the gun-type controller 308 is faced with any between the enemy character E and the screening object G for a predetermined time (any between the enemy character and the screening object is aimed for a predetermined time). Thus, when the condition is satisfied and a flag is set, a predetermined zoom function is implemented. Hereinafter, the process sequence of the normal zoom will be described as below by using a flow representing only a loop process part (see Fig. 40). In addition, although a looping process is simply represented here, a flow in which terminal markings for starting and ending are arranged and the process is restarted each time a predetermined time (for example, 1/60 second) elapses after completion of a series of processes may be used for implementing the above-described process.

First, the state (a state that the gun-type controller 308 is out of a bullet, a state that the character falls down, or the like) of the player (player character P) is acquired (Step S11), and it is determined whether the state is a zoomable state (Step S12). In particular, it is determined that the state is not the zoomable state in a case where the state that the gun-type controller 308 is out of a bullet, the state that the player character P falls down, or the like.

In the zoomable state, the screening object G and the enemy character E that can be zoomed are transformed into 2D coordinates on a plane viewed from the above-described camera of the first person point of view (Step S13). Here, in the 3D objects such as the enemy character E and the screening object G, a plurality of zoom points is set in advance (for example, the abdomen or the like of the enemy character E). After transforming the zoomable objects into 2D coordinates as described above, when any one (a zoom point located closest to aiming) of the zoom points and aiming are located within a predetermined distance (in other words, when the state is a collision state in which the zoom point and the aiming are within a determination circle of a predetermined range), coordinates of the aiming are set as a zoom target (Step S14). In particular, the coordinates of the aiming at the time point are temporarily stored as the coordinates of the zoom target. In addition, by appropriately changing the size of the determination circle such that the determination circle is large for an object located relatively near and is small for an object located relatively far, zoom determination that is based on the law of perspective and is close to the real can be performed. In addition, when the enemy character E hides in the shadow of the screening object G, a distance from the aiming is measured based on not the zoom point of the screening object G but the zoom point of the enemy character E in this embodiment. The process described up to here is so-called a first collision process for determining whether a relative distance between the aiming and the zoom point is smaller than a predetermined value.

As described above, when a zoom collision is generated from the zoom point that is closest to the aiming (that is, when a relative distance between the aiming and the zoom point closest to the aiming is determined), it is determined whether there is a target (zoom target) (Step S15). Thereafter, an area (for example, a rectangle area, and is referred to as a collision in this embodiment) formed in a predetermined range from the stored zoom target as its center is generated. Then, when the aiming at the time point is within the collision, a counting operation is performed (Step S16). Here, it is determined whether a predetermined condition subsequent (for example, the player shoots a bullet by pulling the trigger of the gun-type controller 308, the gun-type controller is out of a bullet, or the player places the gun muzzle of the gun-type controller 308 to be faced with the outside of the screen) is satisfied (Step S17). Then, when the condition subsequent is not satisfied, it is determined whether a state that the aiming is located inside the collision for a predetermined time is formed (whether a concentrate state is formed) (Step S18). The process for determining whether the aiming is within the area (collision) of the predetermined range is so-called a second collision process.

When the above-described state that the aiming is within the above-described collision for the predetermined time is formed, an effect process is activated, and an image process for a zoom operation using the aiming or the zoom target as its center is performed (Step S19). The above-described effect process generates a screen effect for notifying start of the zoom operation. During the effect process, it is determined whether a predetermined condition subsequent (for example, during the effect process, the gun muzzle is turned far away from the enemy character E to another place or the player character shoots a bullet) is satisfied (Step S20). When the condition subsequent is satisfied, a series of processes is completed, and the process is looped to the initial step. On the other hand, when the condition subsequent is not satisfied, it is determined whether the screen effect caused by the zoom effect is completed (Step S21). Then, when the screen effect is completed, the process proceeds to the next zoom process (Step S22). During the zoom process, a privilege such as increasing the attack power or accomplishing a head shot for a specific case, as described later, is represented. After performing the zoom process, when a predetermined condition subsequent (for example, the player shoot a bullet by pulling the trigger of the gun-type controller 308, or the gun-type controller is out of a bullet) is satisfied, the process is looped to the initial step (Step S23).

In addition, here, as the condition subsequent for the normal zoom operation, player's shooting a bullet by pulling the trigger of the gun-type controller 308 or the like is exemplified. However, these are only detailed examples of the condition subsequent for the normal zoom operation. Thus, other than the above-described examples, movement of the enemy character E or player character P's being covered in collapse of the screening object G may be used as the condition subsequent.

The process sequence and content of the normal zoom are as described above, and subsequently, an example of the above-described normal zoom will be described with an image example (see Fig. 37). First, when a predetermined time period (for example, several tens of "ints" and may be different depending on the type of the enemy character E) elapses in a state that the gun muzzle is faced with the vicinity (in particular, in the vicinity of the abdomen of the enemy character E in which a zoom point is set) of the enemy character E, the effect process is activated (see Fig. 37(A)). However, during this time period, when the gun muzzle is turned far away to a different place or a bullet is shot, the zoom process is cancelled, and the activation of the effect process is not performed.

When the effect process is activated, an image process for an effect focused on the aiming or the zoom target is performed (se Fig. 37(B)). An effect, for example, is represented by a screen including a combination of a plurality of circles or ovals as represented in the figure. Parts other than the circle (oval) become dim, and the vicinity of the enemy character E is closed up. However, during this effect process, when the gun muzzle is turned far away from the enemy character E to a different place or a bullet is shot, the effect process is cancelled, and the zoom process is stopped.

When the effect process is completed, subsequently, the zoom process focused on the aiming or the zoom target is started (see Fig. 37(C)). For example, several tens of "ints" is needed for performing the zoom operation to the end. However, it may be set to be different depending on the type of the enemy character E. In addition, when the zoom operation is performed to the end, a representation in which the camera is shaken as hand vibration may be performed. In such a case, the shaking may require, for example, several tens of "ints" to be suppressed. However, it may be set differently as is appropriate.

When the zoom operation is performed to the end as described above (see Fig. 37(D)), according to this embodiment, the following advantages and disadvantages are implemented. Described with a detailed example, as advantages, the attack power is doubled, and the attack power is tripled for a case where the head shot, to be described later, is achieved, and whereby large damage can be given to the enemy character E. On the other hand, as a disadvantage, damage for a case where the player character is shot by a bullet as a counter shot by the enemy character E that moves during the zoom operation is tripled. In addition, in the zoomed state, the field of sight of the player is narrowed, which can be another disadvantage.

Here, during the zoom process, tactics by using the zoom process can be represented by performing processes such as "head shot", "camera rigidity", and "counter shot" as described below.

### [Head Shot]

When the player can attack the head part of the enemy character E during the zoom process, it is called a head shot, and the attack power (the magnitude of damage received by the enemy character E) is tripled. As described above, it may be configured that the attack power during the zoom process is doubled and the attack power of the head shot is tripled, whereby the magnitude of the damage increases by six times for a case where the head shot is achieved. In addition, when the head shot is achieved, a process (representation) in which reload (bullet loading) is automatically performed or the head-shot target character cannot shoot a gun may be added.

### [Camera Rigidity]

During the zoom operation, when the enemy character E moves and is lost from the inside of the screen, for example, the camera rigidity for about 40 "ints" is generated. The camera rigidity is a representation of a state that the camera cannot be switched by fixing a zoomed image for a predetermined time. In the state of the camera rigidity, a place in which the enemy character E is located cannot be acquired at least for a moment, and thus impatience can be given to the player. During the above-described camera rigidity, when the player character E receives attack from the moved enemy character and is shot by a bullet, the "counter shot" is achieved. To the contrary, when the player character can attack the enemy character E during the camera rigidity, an image in which the enemy character E staggers about is displayed (the enemy character E's staggering is represented). In addition, detailed examples of the condition for generating the camera rigidity during the zoom operation are as follows.
There are a case where the aimed/hidden enemy character E and the screening object G in which the enemy character E is located are zoomed and the enemy character E moves therefrom, a case where the enemy character E moves to a place of a zoomed screening object G and then moves therefrom (however, the camera rigidity is not generated for a case where the enemy character E passes by the zoomed screening object G), and the like.

### [Counter Shot]

During the camera rigidity, when the player character P is attacked from the moved enemy character E and shot by a bullet, the "counter shot" is achieved. The feature for such a case, for example, is that tripled damage is received as in the above-described head shot.

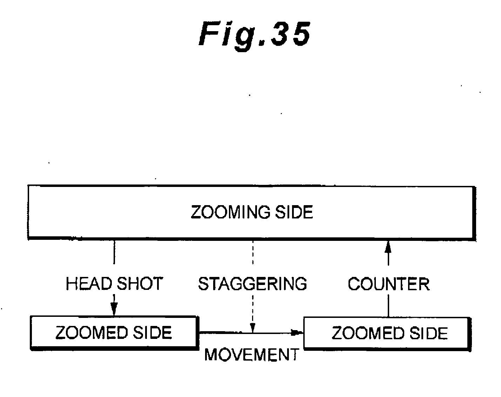

In addition, the representation of the head shot, the counter shot, the staggering described above can be configured to be generated in a same condition for the player character P and the enemy character E. In other words, while a zooming side can achieve the head shot or make the opponent stagger about, a zoomed side can determine the counter shot after moving (see Fig. 35). In addition, although not described detail in descriptions here, the player can be notified that the player character P is zoomed by the enemy character E, for example, by using a representation of blinking the outer frame part of the screen of the monitor 306 in red or the like.

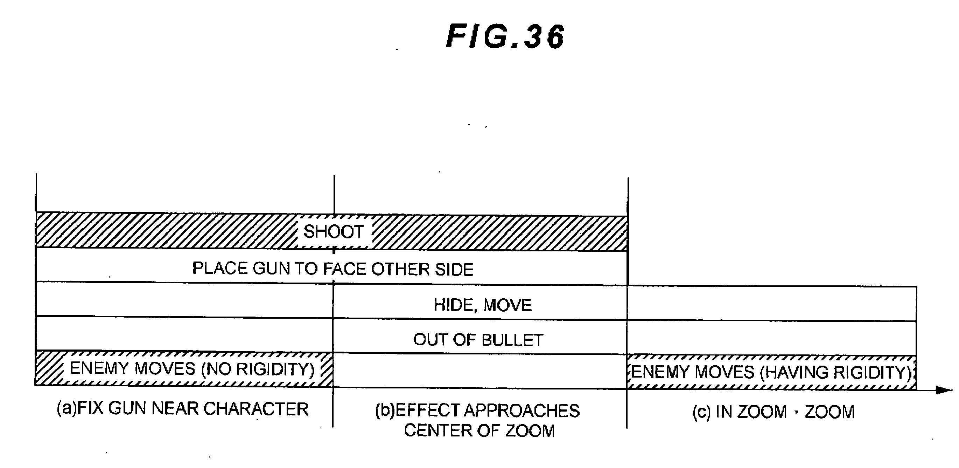

In addition, the condition subsequent (reset condition) of the above-described normal zoom is exemplified as below with reference to a table (see Fig. 36). For example, in (a) a stage in which the gun muzzle of the gun-type controller 308 is faced with and fixed to the vicinity of the zoom point of the enemy character E (a stage before the effect process is activated) and (b) a stage in which the effect process is activated and the effect approaches the zoom center, all the operations for shooting the gun-type controller 308 and for turning the gun muzzle from the screen to a different place become the condition subsequent (see Fig. 36). In addition, a case where a character hides or moves or the gun-type controller 308 is out of a bullet becomes the condition subsequent even in (c) a stage during a zoom process or a zoomed stage, in addition to the above-described (a) and (b) (see Fig. 36). In addition, a case where the enemy character E moves in the stage (a) is the condition subsequent. However, in such a case, the camera rigidity is not generated. On the other hand, a case where the enemy character E moves in the stage (c) is the condition subsequent. In such a case, the camera rigidity is generated (see Fig. 36).

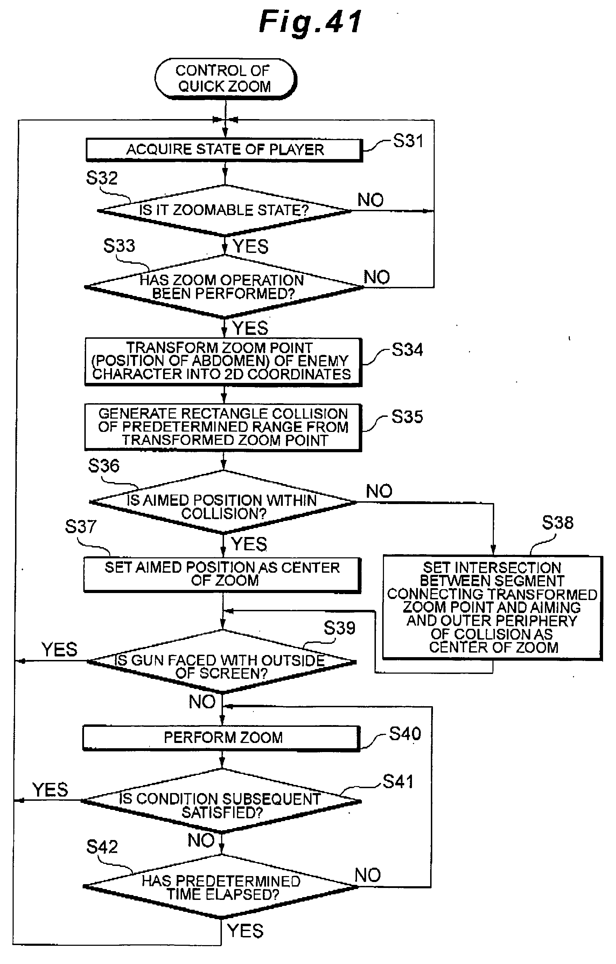

Subsequently, the quick zoom will be described. Although an ordinary zoom control process is the normal zoom (concentrate zoom) as described above, in this embodiment, a quick zoom control process in which zoom standby is not performed and the zoom process is immediately performed under a specific condition is performed. Hereinafter, the process sequence of the quick zoom process will be described as below by using a flow representing only a looping process part (see Fig. 41). In addition, although a looping process is simply represented here, a flow in which terminal markings for starting and ending are arranged and the process is restarted each time a predetermined time (for example, 1/60 second) elapses after completion of a series of processes may be used for implementing the above-described process.

First, the state (a state that the gun-type controller 308 is out of a bullet, a state that the character falls down, or the like) of the player (player character P) is acquired (Step S31), and it is determined whether the state is a zoomable state (Step S32). In particular, it is determined that the state is not the zoomable state in a case where the state that the gun-type controller 308 is out of a bullet, the state that the player character P falls down, or the like.

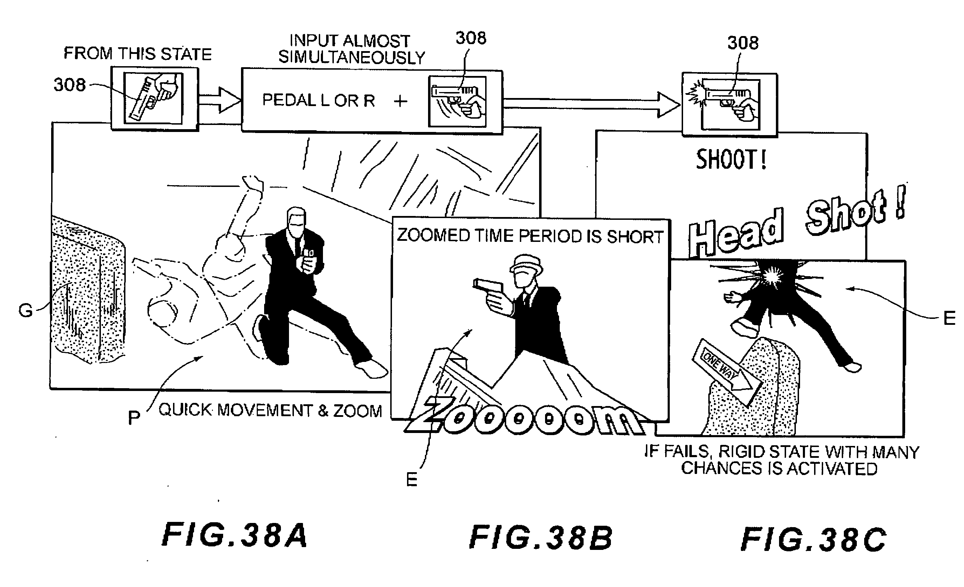

In the zoomable state, it is determined whether the player performs the zoom operation (Step S33). The zoom operation described here is an operation for pushing the pedal switch 310 or 312 within a predetermined time period (for example, within 10 to 20 frames) after the gun muzzle of the gun-type controller 308 is faced with the inside of the screen. The operation of the pedal switch 310 or 312 for this case is treated as an input command for transiting to the quick zoom process, and thus a player's operation such as horizontal movement is not performed. In addition, for example, in this embodiment, the predetermined time period (the predetermined frame) is set to be short. Accordingly, it is difficult for a player to transit to the quick zoom process, and the player is required to have adroitness or skill to some degree (see Fig. 38).

When it is determined that the zoom operation is performed, the zoom point of the enemy character E that is, for example, set in the abdomen is transformed into 2D coordinates in a plane viewed from the above-described camera of the first person point of view (Step S34). Next, an area (for example, a rectangle area and is referred to as a collision in this embodiment) of a predetermined range having the position of the zoom point that is transformed into the 2D coordinates as its center is generated (Step S35). Subsequently, it is determined whether the position of the aiming is within the collision (Step S36). When the position of the aiming is within the collision, the position of the aiming is used as the center of zoom (Step S37). On the other hand, when the position of the aiming is not within the collision, an intersection between a segment connecting the transformed zoom point and the aiming and the outer periphery (outer frame) of the collision is used as the center of zoom (Step S38).

Next, whether the aiming of the gun-type controller 308 is faced with the outside of the screen is determined as one of the condition subsequent (Step S39). When the aiming of the gun-type controller is not faced with the outside of the screen, the process proceeds to the zoom process (Step S40). During the zoom process, as described above, a privilege such as increasing the attack power or achieving the head shot for a specific case is represented. After the zoom process, when a predetermined condition subsequent (for example, the player places the gun muzzle of the gun-type controller 308 to face the outside of the screen, or the player is covered in the collapse of the screening object G) is satisfied, the process is looped to the initial step (Step S41). In this embodiment, a case where out-of-bullet or movement of the enemy character E is not included in the condition subsequent of the quick zoom process. When the condition subsequent is not satisfied, the zoomed state is continued until a predetermined time elapses. Then, after the predetermined time elapses, the process is looped to the initial step (Step S42).

The process sequence and content of the quick zoom are as described above, and subsequently, an example of the above-described quick zoom will be described with an image example (see Fig. 38). First, when the player character takes the non-shooting posture in a hiding place located in the shadow of the screening object G, a zoom operation is determined to be performed by transiting the player character to the shooting posture by performing an operation for placing the gun muzzle to face the screen and by pushing the pedal switch 310 or 312 almost simultaneously with the above-described operation. Accordingly, transition to the quick zoom can be made. In such a case, the zoom process is immediately started without waiting for elapse of a predetermined time period in the aimed state as in the above-described normal zoom. In addition, in this embodiment, when the transition to the quick zoom is made by performing the zoom operation, a player character P's operation for quickly popping out from the shadow of the screening object G in a low posture and taking the posture (shooting posture) for aiming the gun is represented (see Fig. 38(A)). A time period between the quick zoom operation and the completion of the zoom operation may be set differently depending on the type of the enemy character E or the like. For example, in this embodiment, a time period (for example, several "ints" to several tens of "ins") that is shorter than that of the normal zoom operation is set.

When the zoom operation is performed to the end as described above (see Fig. 38(B)), according to this embodiment, the following advantages and disadvantages are implemented. Described with a detailed example, as advantages, the attack power is doubled, and the attack power is tripled for a case where the head shot, to be described later, is achieved, and whereby large damage can be given to the enemy character E. On the other hand, as a disadvantage, a rigid state is represented after the quick zoom operation, and thus the player character P cannot shoot the gun during the rigid state (see Fig. 38(C)). In this rigid state, even when the player pushes the pedal switch 310 or 312 by using the foot, the player character P is not moved. Thus, according to the game device 300 of this embodiment, the quick zoom operation exhibits an aspect of so-called double edged sword-like technology in which the quick zoom operation can give large damage by a shot in the zoomed state, and the player character has a high risk for receiving large damage. Accordingly, the amusement of the game is improved. In addition, in the rigid state after the quick zoom operation, a state in which the character cannot move as if the character is rigid is represented, differently from the above-described camera rigidity.

Although the above-described embodiment is one appropriate embodiment of the present invention, the invention is not limited thereto. Thus, the embodiment may be changed in various manners without departing from the gist of the present invention.

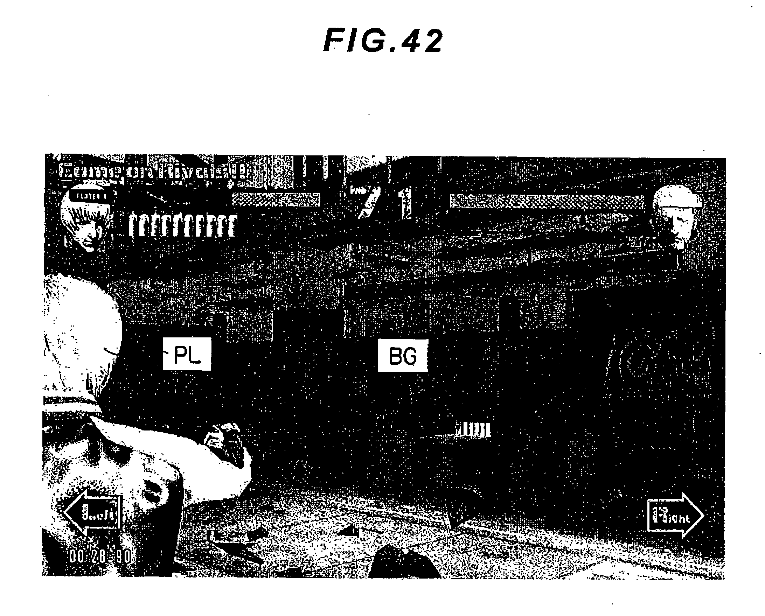

Subsequently, another embodiment of the present invention will be described (see Figs. 42 to 46).

Fig. 1 is a perspective view illustrating the whole electronic play device according to the present invention. The electronic play device 300 includes a first casing 302 and a second casing 304. To the upper part of the first casing 302, a monitor 306 is installed. To the second casing 304, a coin insertion slot and a gun-type controller 308 as an operation device are connected.

A player aims the gun-type controller to be faced with the monitor 306 and pulls a trigger toward the enemy character displayed on the monitor. When a bullet hits the enemy character, the enemy character inside the monitor can be brought down. From the gun-type controller 308, a communication line is drawn out, and the communication line is connected to the second casing 304. In addition, the entire height of the second casing 304 is smaller than that of the first casing 302, and thus, it is configured that the field of view of the player is not blocked. Inside the first casing 304, a control board of the electronic play device is housed.

In addition, pedal switches 310 and 312 are provided from a front end of the lower end of the second casing 304 on the player side toward the player. There are left and right pedal switches. By player's individually pushing the left and right pedal switches by the feet, a player character on a screen can be moved to the left or right side.

In the example of a game that is implemented in the above-described electronic play device, a player character fights an enemy character in a three-dimensional virtual space. The player character performs a gun battle with the enemy character while hiding its body behind a post or the like. When the player pulls the trigger of the gun-type controller, an operation signal from the gun-type controller is transmitted to the control board, and the control board determines whether the enemy character is shot by a bullet. When the enemy character is shot, an image representation such as bringing the enemy character down is performed.

On the other hand, when the player character is shot by a bullet of the enemy character, or a post near the player character is shot by a bullet of the enemy character, the post is collapsed to cause damage to the player character. Even when a drum can, for example, containing a combustible material that is located near the player character is shot by a bullet, the player character receives damage due to explosion of the drum can.

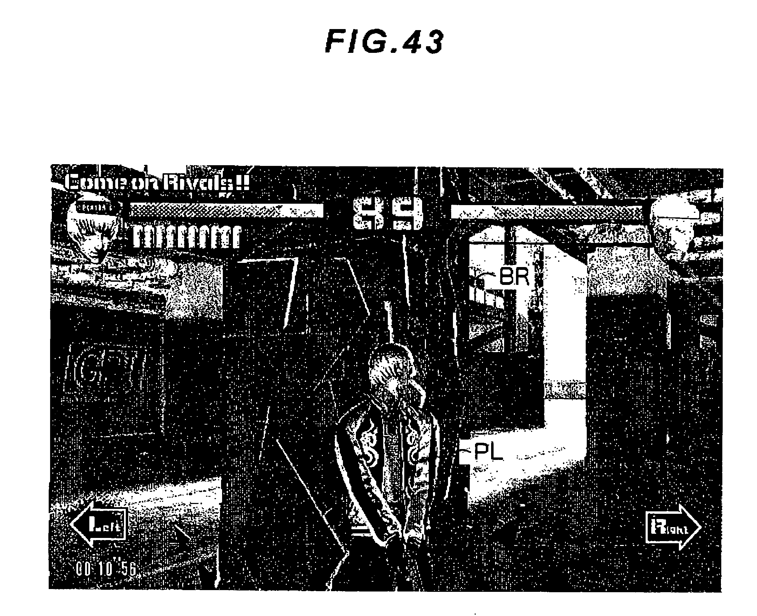

Fig. 42 is an example of a screen displayed on the monitor 306. The player character PL and a background BG are viewed from the virtual first person point of view to be displayed. When the player faces the gun muzzle of the gun-type controller toward the monitor, a virtual space is displayed from the first person point of view. At this moment, the player character PL, as illustrated in Fig. 42, performs a behavior for aiming a gun to the enemy character. When the player faces the gun-type controller outside the display screen of the monitor, as illustrated in Fig. 43, the virtual view point is moved to a third person point of view, and the player character PL performs a behavior for laying down the gun. At this moment, the player character PL takes a behavior for avoiding the attack from the enemy character by hiding in the post BR.

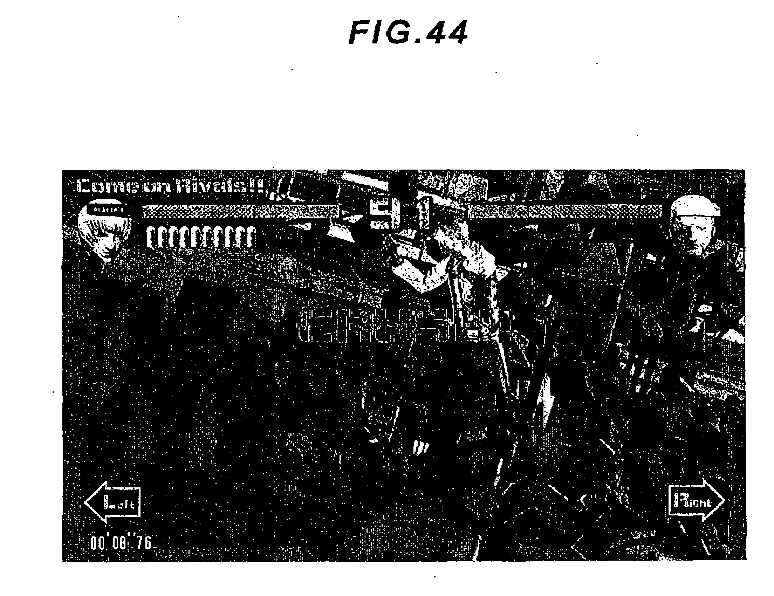

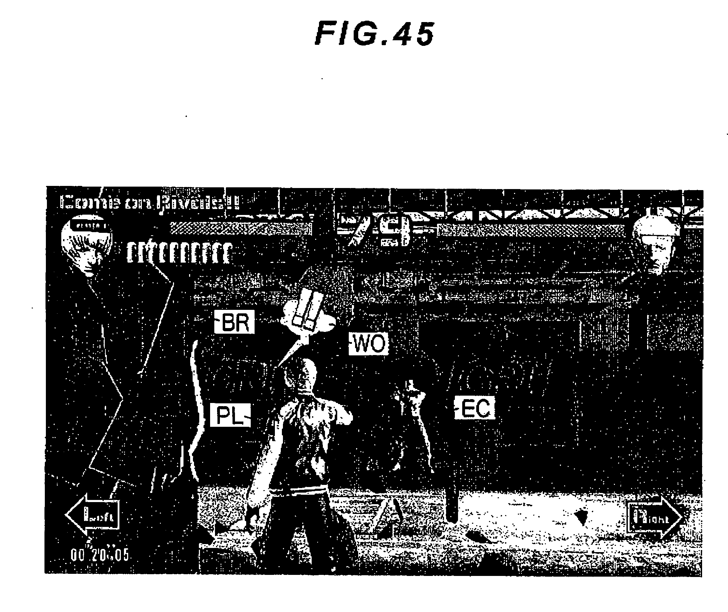

Fig. 45 is a screen in which the enemy character EC contraposing the player character PL is viewed from the third person point of view. The post BR located next to the player character receives damage by a bullet shot by the enemy character. When the post receives damage more than is needed, the post collapses as illustrated in Fig. 44, and thereby damage is given to the player character. In Fig. 42, the virtual camera is located in the first person point of view, and accordingly, a state that the post is damaged cannot be recognized by the player. Thus, as illustrated in Fig. 45, the virtual view point is moved from the first person point of view to the third person point of view, and a warning mark "!"WO is displayed on the screen.

Fig. 2 is a block diagram illustrating the overview of the game device. A program data memory unit 600 stores game programs and data needed for processes on the basis of the game programs. The game programs or data are stored in a recording medium such as an optical disc, a hard disk, or a semiconductor memory such as a flash memory. The control unit 602 determines the behavior of the player character based on an output from a device operated by the player, the game program, and the data stored in the memory unit 600. The operation devices are a trigger 604 of the gun-type controller, the gun aiming position detecting unit 606 that detects the direction (aiming) that the gun-type controller faces, and the left and right pedal switches 310 and 312.

The gun aiming-position detecting unit 606 that detects the aiming of the gun-type controller is configured as follows, As illustrated in Fig. 24 of Japanese Patent Application Laid-Open No. 11-86038, a plurality of LEDs is disposed near the display panel and is configured to emit light sequentially. Then, a plurality of light receiving units disposed in a simulation controller receives the light. Then, the control unit 10 analyzes signals from each light receiving unit so as to detect the direction of the gun muzzle of the gun-type controller, The control unit 602 determines the position of a virtual view point inside the virtual space based on the game program. Then, the control unit 602 performs a projection transformation process for an image acquired from viewing the virtual space from the position of the virtual view point and displays the transformed image in a display unit 608. In addition, the game program generates various sound effects such as a bullet shooting sound or a hit sound, an generates the sound effects by using a sound generating unit 610.

Fig. 3 is a detailed block diagram of the play device illustrated in Fig. 2. The above-described control unit 602 includes a CPU block 10, a video block 11, and a sound block 12.

The CPU block 10 is a main body for performing an image process based on the game program and includes a bus arbiter 100, a CPU 101, a main memory 102, a ROM 103, and a program data memory unit 600. The bus arbiter 100 is configured to be able to control data reception and data transmission by assigning a bus occupying time period to a device that is interconnected with the arbiter through a bus.

The CPU 101 transfers program data for an operating system stored in the game program data memory unit 600 to the main memory 102 by executing an initial program (initial execution program) that is stored in the ROM 103 at a time when the power is turned on. Thereafter, the CPU 101 is operated in accordance with the operating system. Thus, the CPU continuously transfers the application program data stored in the program data memory unit to the main memory 102 and executes the program.

In addition, the CPU 101 is configured to be able to transfer image data to a graphic memory 111 and transfer voice data to a sound memory 121. The processes performed by the CPU 101 in accordance with the program data are mainly the input of an operation signal from an operation device 107 and analysis of communication data from the communication device 130 and an image process directed to the video block 11 and a voice process directed to the sound block 12, based thereon.

The main memory 102, other than mainly storing the above-described program data for the operating system and the application program data, provides a work area in which a static variable, a dynamic variable, or the like is stored to the CPU. The ROM 103 is an area in which an initial program loader is stored.

In the program data memory unit, program data for enabling the game device to perform a predetermined image processing method, image data for displaying an image, voice data for outputting voice, and the like are stored. In addition, the game device can enable the player character P to fight against an enemy character operated by a match-up player as a match-up opponent in a common virtual three-dimensional space by exchanging data with another game device through the communication device 130. When there is no match-up player, the enemy character is operated by the CPU 101.

The operation device 107 outputs an operation signal corresponding to the state of a gamer's operation performed by a player for the operation button or the like to a bus of the CPU block 10. The video block 11 includes a VDP (Video Display Processor) 110, a graphic memory 111, and a video converter 112. In the graphic memory 111, as described above, the image data read out from the program data memory unit is stored.

The VDP 110 is configured to read image data needed for image display from the image data stored in the graphic memory 111 and perform coordinate transformation (geometry calculation), a texture mapping process, a display prioritizing process, a shading process, or the like in accordance with data needed for image display which is supplied from the CPU 101, that is, command data, view point position data, light source position data, object designating data, object position data, texture designating data, texture density data, field of sight converting matrix data, or the like.

In addition, the above-described processes such as the coordinate transformation may be configured to be performed by the CPU 101. In other words, a process is assigned to a specific device in consideration of calculation capability of each device. The video encoder 112 is configured to output the image data generated by the VDP 110 to the monitor device 608.

The sound block 12 includes a sound processor 120, a sound memory 121, and a D/A converter 122. In the sound memory 121, as described above, the voice data read out from the CD-ROM is stored. The sound processor 120 is configured to read out the voice data such as waveform data stored in the memory 121 and perform various effect processes on the basis of a DSP (Digital Signal Processor) function, a digital/analog conversion process, and the like, based on the command data supplied from the CPU 101. Then, the D/A converter 122 is configured to be able to convert the voice data generated by a sound processor 120 into an analog signal and output the analog signal to a speaker 610 that is connected externally.

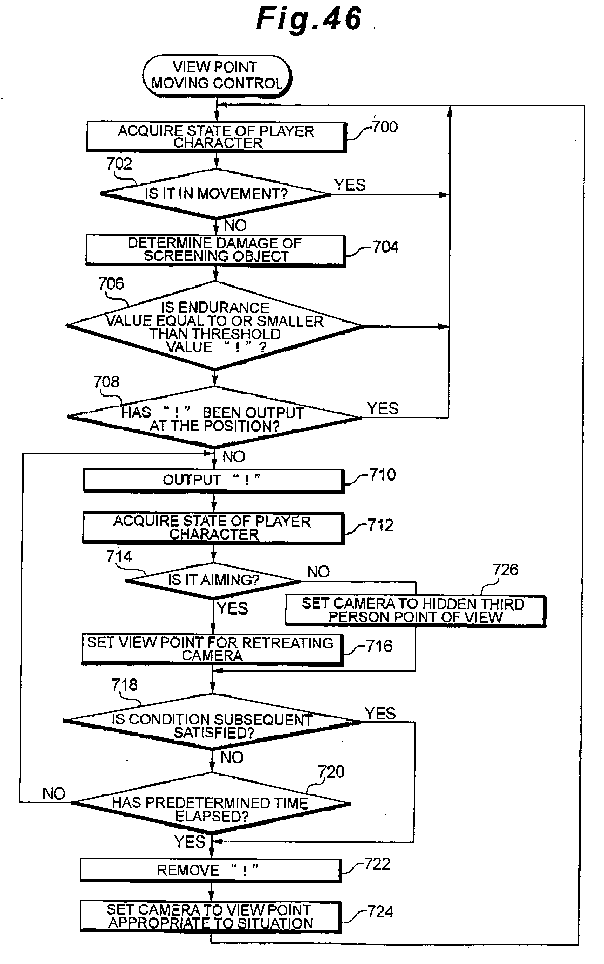

Next, the operation of the game device will be described based on a flowchart. The control unit 602 of the electronic play device 602, mainly the CPU 101 performs control for moving the virtual view point based on a flowchart represented in Fig. 46.

This flowchart is performed for each frame. In Step 700, the CPU acquires the state of the player character. The state of the player character is the state of the player character including whether the player is stopped or the player character is moving, or the like. There are control values for each state of the player character, and by checking the control values by using the CPU, the state of the player character can be determined. The control values are stored in the main memory 102. In addition, the movement of the player character to the left or right side in the virtual space is implemented by ON of the left and right pedal switches 310 and 312, and thus, the CPU can determine that the player character is moving based on ON of the pedal switches.

When it is determined that the player character is moving in Step S702, the process returns to Step 700. In addition, when the player character is not active, for example, when the player character is shot by a bullet from the enemy character and is fallen down, and thus an input operation from the player cannot be reflected on the player character, the process returns similarly.

On the other hand, when the player character is substantially in a stop state, the process proceeds to Step 704. Then, it is determined whether there is a screening object such as a post near the player character in which the player character can hide its body. When there is the screening object, damage of the screening object is determined. The damage of the screening object is calculated based on the number of hits of bullets of the enemy character and the types of the hit bullets. It is determined whether the screening object is hit by a bullet based on whether a moving bullet and the screening object collide with each other in the virtual space.

. Each time the screening object is hit by a bullet, the endurance value of the screening object decreases. An image in which the screening object is gradually damaged is reproduced in accordance with the decrease in the endurance value. When the endurance value is equal to or smaller than a limit value, an image in which the screening object collapses is reproduced.

The CPU determines whether the endurance value is equal to or smaller than a specific threshold value (706). When the endurance value is equal to or larger than the threshold value, it is determined that there is no possibility that the screening object collapses, and the process proceeds to Step 700. On the other hand, when the endurance value is equal to or smaller than the threshold value, it is determined whether the warning mark "!" has appeared in the past.

As is represented in Step 710 and thereafter, when the endurance value of the screening object is equal to or smaller than a specific value, a warning mark is represented, and a position of the virtual view point is changed from the first person point of view to a position of the third person point of view. The process of Step 708 represents that the process returns to Step 700 in a case where the player character is located near the screening object that becomes the target for the warning mark and the warning mark has appeared in the past. This means that a process for displaying a warning mark and moving the view point is performed only once for a specific screening object.

The CPU sets a flag that indicates whether a warning mark is displayed for each screening object in the system memory 102. The CPU performs a determination process of Step 708 by checking this flag.

When negative determination is acquired in Step 708, the process proceeds to Step 710, and a warning mark is displayed near the specific screening object and the player character. Fig. 45 represents that a warning mark is displayed near the head part of the player character.

In Step 712, the CPU acquires the state of the player character. In Step 714, it is checked whether the player character is on the gun-aiming behavior. As the player places the gun-type controller toward the screen without pushing the pedal switches by the feet, the player character performs an operation for aiming the gun. At this moment, the first person point of view is selected by the game program (Fig. 42). On the other hand, when the player character is not on the behavior for aiming the gun toward the enemy character, the third person point of view is employed (Fig. 43).

When it is checked that the player character is on the gun-aiming behavior in Step 714, the virtual camera is moved from the position (Fig. 42) of the first person point of view to the position (Fig. 45) of the third person point of view (Step 716). On the other hand, when it is checked that the player character is not on the gun-aiming behavior in Step 714, the CPU moves the position of the virtual camera to a position in which a state of player character PL's hiding in the post BR can be identified well (Step 726).

As can be known from Fig. 45, although the player cannot recognize the screening object (post) near the player character PL in Fig. 42, the player can recognize the post BR located next to the player character in Fig. 45. Accordingly, the player can know that the post is started to be collapsed by the attack from the enemy character. At this moment, as illustrated in Fig. 45, a warning mark "!" is represented on the screen.

The CPU checks whether a condition for canceling the warning mark and view point moving process occurs (718). For example, the condition subsequent is that the player character who fights against the enemy character with hiding in the shadow of the screening object is apart from the wall by an operation of the pedal switches performed by the player who has seen the warning mark. In such a case, originally, the warning mark is not needed, and the view point is not needed to be fixed to the third person point of view. In addition, a case where attack from the enemy character is violent and the screening object collapses or the like corresponds to the condition subsequent.

When negative determination is made for the condition subsequent, the CPU checks whether a predetermined time period elapses after displaying the warning mark on the screen in Step 718. When the predetermined time period elapses, the CPU removes the warning mark "!" from the screen, and cancels locating the position of the camera to the third person point of view (716). Then, the CPU moves the position of the camera to a position appropriate to the current situation (Steps 722 and 724). For example, the position of the virtual camera is returned from the position of the third person point of view represented in Fig. 45 to the position of the first person point of view represented in Fig. 42. Alternatively, in a case where the player character is moving, the position of the virtual camera is moved to a position of the third person point of view in which the moving player character can be observed. On the other hand, when it is determined that the predetermined time period has not elapsed in Step 718, the process returns to Step 712, and the CPU maintains the warning mark and fixing the virtual camera to the position of the first person point of view.

The "predetermined time period" in Step 720 is determined as follows. When the screen (the display time period represented in Fig. 45) viewed from the third person point of view is long, realistic sensation decreases. On the other hand, when the screen is too short, the player cannot recognize that the screening object near the player character starting to collapse. Based on the requests on both sides, the predetermined time period is determined. As an appropriate example, the "predetermined time period" is 1.5 seconds.

For the predetermined time period, a set value is stored in the memory. The set value for the predetermined time period may be read out by the CPU from a memory unit or a main memory. In addition, the time period for retreating the virtual camera may be appropriately changed based on the progress state of the game, the type of the object to be broken, or the like. The time period for retreating the camera and the time period for displaying the warning mark are set in accordance with the type of the screening object. Thus, when the screening object is a dangerous material (a material causing large damage in case of explosion, compared to a normal case), the "predetermined time period" may be set to be relatively long, compared to an ordinary case.

In the above-described embodiment, the screening object corresponds to a first object in the claims, the player character corresponds to a second object in the claims, and the enemy character corresponds to the other objects in the claims. In addition, the degree of endurance corresponds to the degree of influence in the claims.

According to the above-described embodiment, as can be known by comparing Figs. 42 and 45 with each other, until the screening object (post) is likely to broken, the play device is configured such that the screening object is not within the display range in the position of the first person point of view. When the screening object is likely to be broken, the virtual camera is moved in a direction for being spaced apart from the player character, so that the screening object is within the display range. The third person point of view represented in Fig. 43 represents both the player character and the screening object in a case where the player character is in a defensive state. However, the position of the third person point of view represented in Fig. 43 is different from that represented in Fig. 45. The position of the point of view represented in Fig. 45 is a spot from which the screening object can be observed from a broken side, so that the screening object started to be broken can be precisely shown to the player. Although the enemy character is not illustrated in Fig. 42, when the position of the view point is changed from Fig. 42 to Fig. 45, the direction of the view point is maintained to be substantially the same.

The invention in the above-described embodiment relates to an electronic play device, and more particularly, to an electronic play device that implements a shooting game in which a player shoots an enemy character by using a gun-type controller and obtains a score based on the success of shooting. Here, the background of the present invention and problems to be solved will be described as below.

Three-dimensional virtualization technology is employed in the electronic play device. The three-dimensional virtualization technology is technology in which an object is disposed inside a virtual space formed as a three dimension, a perspective transformation process is performed for an image acquired from viewing the object from a virtual view point, and the transformed image is displayed in a display. The virtual view point is defined as a virtual camera inside the three dimensional space. The virtual camera is moved inside the virtual space on reception of an output signal from a gun-type model that is handled by a player.

An object is defined inside the virtual space and may be a character, a background, or the like. A character is mainly a person. A character operated by a player is called a player character. In addition, a character that becomes an enemy of the player character is called an enemy character. In an application program for a shooting game, a shooting game between the player character and the enemy character is played In a play system in which players fight one another among a plurality of electronic play devices, shooting battles among the player characters are played.

As view point switching technology for switching between positions of virtual view points, there is technology disclosed in Japanese Patent Application Laid-Open No. 07-116343. According to the disclosed technology, there are a first person point of view and a third person point of view as view points. The former view point is located in a position of the eyes of the player character or in a position near a head part of the player character from which the head part of the player character is mainly looked down. In addition, the latter view point is located in a position departed from the player character from which the entire body of the player character is looked down.

According to the first person point of view, the player can adjust the view point by matching an approximate height of eyes of the player character, and accordingly, the first person point of view provides a game environment having high realistic sensation to the player. On the other hand, while the third person point of view does not have the above-described advantage, the third person point of view has an advantage that the player can recognize the virtual space widely.

Besides, there is a conventional example in which disposition of a plurality of characters is displayed on a screen like a radar in a real world. In this example, the player can acquire relative positions of the plurality of characters regardless of the position of the view point.

### [Disclosure of the Invention]

### [Problems to be Solved by the Invention]

For example, a player in the first person point of view may not recognize a case where a wall near the character is started to collapse or the like. Thus, to notify the player of danger by displaying a warning mark may be considered. However, the position of the view point does not change, and accordingly, the player cannot objectively recognize the environment in which he faces the danger. Thus, when the user operates the operation device so as to switch from the first person point of view to the third person point of view, the realistic sensation of the first person point of view may decrease.

Thus, the object of the present invention is to provide technology for controlling movement of the virtual camera which notifies the player of the surrounding environment of a specific object without decreasing the realistic sensation.

According to the present invention, technology for controlling movement of the virtual camera which notifies the player of the surrounding environment of a specific object without decreasing the realistic sensation can be provided.

### Industrial Applicability

It is preferable that the present invention is applied to an upright-type body sensory game device, and more particularly, to a simulated shooting game device using a simulated gun.

## Claims

1. An electronic play device that sets a player character that is operated in accordance with an operation of a player, an enemy character that becomes a match-up opponent of the player character, and a plurality of shield objects that are disposed in movement areas of the player character and the enemy character in a virtual space as a plurality of objects, performs a coordinate transformation process for an image acquired by viewing the objects inside the virtual space from a virtual view point in accordance with an output from an input device that is operated by the player by using an image processing device, and displays the transformed image in a display device, the electronic play device comprising:
movement control means that, in a case where there is a movement direction for the player character and/or the enemy character, sets a movement destination of one character, which receives the movement direction, between the player character and the enemy character, based on a position relationship between the other character and the shield objects.

2. The electronic play device according to claim 1, wherein the movement control means sets the movement destination of the one character that receives the movement direction to a position in which at least a part of the one character, viewed from a view point of the other character, is hidden behind the shield object.

3. The electronic play device according to claim 2, wherein the shield object that is located closest to the one character in the movement direction of the one character that receives the movement direction is set as a movement destination shield object, and the movement destination is set to a position located behind the movement destination shield object.

4. The electronic play device according to claim 3, wherein, in a case where the one character receives the movement direction, the movement destination of the one character that receives the movement direction is set to a point on a virtual straight line that connects the position of the other character at a time point when the movement direction is received and a reference point of the movement destination shield object.

5. The electronic play device according to any one of claims 1 to 4,
wherein the electronic play device provides a shooting game using a simulated gun, and
wherein the input device includes a gun-type controller that can perform a simulated operation and left and right independent pedal switches that can be operated to move the player character in one direction and the other direction as movement directing means.

6. The electronic play device according to claim 5, further comprising a gun aiming position detecting unit that detects an aiming position of the gun-type controller, wherein moving speed of the player character changes in accordance with the gun aiming position.

7. The electronic play device according to claim 5, wherein, when the movement direction for a direction that is reverse to a moving direction is received from the pedal switch during a moving operation of the player character in the moving direction, the player character is turned back to be moved in the reverse direction, and a new movement destination is set in a movement direction after the turning-back operation.

8. The electronic play device according to any one of claims 5 to 7, wherein the pedal switches also serve as special command inputting means used for directing a special operation other than the moving operation to the player character in a case where a predetermined operation is input under a predetermined condition.

9. An electronic play control method for controlling a moving operation of any of objects at a time when a coordinate transformation process for an image acquired by viewing the objects inside a virtual space from a virtual view point in accordance with an output from an input device that is operated by a player is performed by using an image processing device and the transformed image is displayed in a display device,
wherein a plurality of the objects set in the virtual space include a player character that is operated in accordance with an operation of the player, an enemy character that becomes a match-up opponent of the player character, and a plurality of shield objects that are disposed in movement areas of the player character and the enemy character, and
wherein, in a case where there is a movement direction for the player character and/or the enemy character, a movement destination of one character, which receives the movement direction, between the player character and the enemy character is set based on a position relationship between the other character and the shield objects.

10. A game program for allowing a computer of an electronic play device, which sets a player character that is operated in accordance with an operation of a player, an enemy character that becomes a match-up opponent of the player character, and a plurality of shield objects that are disposed in movement areas of the player character and the enemy character in a virtual space as a plurality of objects, performs a coordinate transformation process for an image acquired by viewing the objects inside the virtual space from a virtual view point in accordance with an output from an input device that is operated by the player by using an image processing device, and displays the transformed image in a display device, to perform, in a case where there is a movement direction for the player character and/or the enemy character, a sequence for setting a movement destination of one character, which receives the movement direction, between the player character and the enemy character, based on a position relationship between the other character and the shield objects.

11. An electronic play device comprising: an image processing device that disposes a plurality of objects in a virtual space, changes the position of a virtual view point in accordance with an output from an operation device operated by a player, performs a coordinate transformation process for an image acquired from viewing the objects within the virtual space from the virtual view point, and displays the transformed image in display means,
wherein the image processing device includes:
first means that disposes a first object in the virtual space;
second means that disposes a second object near the first object;
third means that disposes the virtual view point in a first position near the second object;
fourth means that disposes the virtual view point in a second position departed from the second object;
fifth means that calculates the degree of influence of objects other than the first object and the second object on the first object; and
sixth means that places the virtual view point in the first position before the result of calculation exceeds a threshold value, moves the virtual view point located in the first position from the first position to the second position when the result of calculation exceeds the threshold value to be fixed to the second position, and releases fixing of the virtual view point to the second position after a limited time elapses.

12. The electronic play device according to claim 11, wherein the image processing device further includes means for generating a warning mark in the display means in a case where the degree of influence exceeds the threshold value.

13. The electronic play device according to claim 11, wherein the limited time is a time period until the influenced first object exceeds the threshold value to be exploded.

14. The electronic play device according to claim 11, wherein the sixth means moves the virtual view point located in the second position to a position that is determined based on an output from the input device.

15. The electronic play device according to claim 11, wherein the sixth means moves the virtual view point located in the second position to the first position.

16. An image processing method in which an electronic play device including an image processing device that disposes a plurality of objects in a virtual space, changes the position of a virtual view point in accordance with an output from an operation device operated by a player, performs a coordinate transformation process for an image acquired from viewing the objects within the virtual space from the virtual view point, and displays the transformed image in display means is implemented,
wherein the image processing device, based on a game program, includes:
a first process that disposes a first object in the virtual space;
a second process that disposes a second object near the first object;
a third process that disposes the virtual view point in a first position near the second object;
a fourth process that disposes the virtual view point in a second position departed from the second object;
a fifth process that calculates the degree of influence of objects other than the first object and the second object on the first object; and
a sixth process that places the virtual view point in the first position before the result of calculation exceeds a threshold value, moves the virtual view point located in the first position from the first position to the second position when the result of calculation exceeds the threshold value to be fixed to the second position, and releases fixing of the virtual view point to the second position after a limited time elapses.

17. A game program that allows an electronic play device including an image processing device that disposes a plurality of objects in a virtual space, changes the position of a virtual view point in accordance with an output from an operation device operated by a player, performs a coordinate transformation process for an image acquired from viewing the objects within the virtual space from the virtual view point, and displays the transformed image in display means is implemented to perform:
a first process that disposes a first object in the virtual space;
a second process that disposes a second object near the first object;
a third process that disposes the virtual view point in a first position near the second object;
a fourth process that disposes the virtual view point in a second position departed from the second object;
a fifth process that calculates the degree of influence of objects other than the first object and the second object on the first object; and
a sixth process that places the virtual view point in the first position before the result of calculation exceeds a threshold value, moves the virtual view point located in the first position from the first position to the second position when the result of calculation exceeds the threshold value to be fixed to the second position, and releases fixing of the virtual view point to the second position after a limited time elapses.

18. A recording medium having the game program recorded thereon that can be readable by the computer of the image processing device.

## Amended claims

### Amended claims under Art. 19.1 PCT

**1.** (Amended) A game device that generates an image of a match-up game in which a player character that is operated by player's operating operation means and an enemy character that becomes a match-up opponent of the player character fight each other by moving within a virtual space and displays the generated image in a display device,
wherein, in the virtual space, a player character moving area in which the player character can be moved and player character stop-position setting areas corresponding to a plurality of screening objects that are disposed in the player character area are set and
the game device comprising player character moving control means that determines the nearest screening object in the movement direction of the player character as a shield object that becomes a movement target of the player character based on a position of the player character and a movement direction input from the operation means at a time when an input for moving the player character in a redetermined direction is made by the operation means, sets a movement target point of the player character to a position located within the player character stop-position setting area, in which the player character is in a shadow of the determined shield object with respect to a position of the player character based on information included in the player character stop-position setting area set for the determined screening object and coordinate information of the position of the enemy character at a time point when the moving operation is input, moves the player character toward the set player character stop-position, and performs a control operation for stopping the movement of the player character in the stop position at a time when the player character arrives at the player character stop-position.

**2.** (Deleted)

**3.** (Amended) The game device according to claim 1, wherein the shield object that is located closest to the one character in the movement direction of the one character that receives the movement direction is set as a movement destination shield object, and the movement destination is set to a position located behind the movement destination shield object.

**4.** (Amended) The game device according to claim 3, wherein, in a case where the one character receives the movement direction, the movement destination of the one character that receives the movement direction is set to a point on a virtual straight line that connects the position of the other character at a time point when the movement direction is received and a reference point of the movement destination shield object.

**5.** (Amended) The game device according to any one of claims 1,3,and 4,
wherein the electronic play device provides a shooting game using a simulated gun, and
wherein the input device includes a gun-type controller that can perform a simulated operation and left and right independent pedal switches that can be operated to move the player character in one direction and the other direction as movement directing means.

**6.** (Amended) The game device according to claim 5, further comprising a gun aiming position detecting unit that detects an aiming position of the gun-type controller, wherein moving speed of the player character changes in accordance with the gun aiming position.

**7.** (Amended) The game device according to claim 5, wherein, when the movement direction for a direction that is reverse to a moving direction is received from the pedal switch during a moving operation of the player character in the moving direction, the player character is turned back to be moved in the reverse direction, and a new movement destination is set in a movement direction after the turning-back operation.

**8.** (Amended) The game device according to any one of claims 5 to 7, wherein the pedal switches also serve as special command inputting means used for directing a special operation other than the moving operation to the player character in a case where a predetermined operation is input under a predetermined condition.

**9.** (Amended) A game control method for controlling a moving operation of any of objects at a time when a coordinate transformation process for an image acquired by viewing the objects inside a virtual space from a virtual view point in accordance with an output from an input device that is operated by a player is performed by using an image processing device and the transformed image is displayed in a display device,
wherein a plurality of the objects set in the virtual space includes a player character that is operated in accordance with an operation of the player, an enemy character that becomes a match-up opponent of the player character, and a plurality of shield objects that are disposed in movement areas of the player character and the enemy character, and
wherein, in a case where there is a movement direction for the player character and/or the enemy character, when a movement destination of one character, which receives the movement direction, between the player character and the enemy character at a time point when the movement direction is received is automatically set based on a position relationship between the other character and the shield objects, the movement destination of the one character that receives the movement direction is set to a position in which at least a part of the one character is hidden behind the shield object, viewed from the view point of the other character.

**10.** (Amended)A game program for allowing a computer of a game device, which sets a player character that is operated in accordance with an operation of a player, an enemy character that becomes a match-up opponent of the player character, and a plurality of shield objects that are disposed in movement areas of the player character and the enemy character in a virtual space as a plurality of objects, performs a coordinate transformation process for an image acquired by viewing the objects inside the virtual space from a virtual view point in accordance with an output from an input device that is operated by the player by using an image processing device, and displays the transformed image in a display device, to perform, in a case where there is a movement direction for the player character and/or the enemy character, when a movement destination of one character, which receives the movement direction, between the player character and the enemy character at a time point when the movement direction is received is automatically set based on a position relationship between the other character and the shield objects, a sequence for setting the movement destination of the one character that receives the movement direction to a position in which at least a part of the one character is hidden behind the shield object, viewed from the view point of the other character.

**11.** (Amended) A game device comprising: an image processing device that disposes a plurality of objects in a virtual space, changes the position of a virtual view point in accordance with an output from an operation device operated by a player, performs a coordinate transformation process for an image acquired from viewing the objects within the virtual space from the virtual view point, and displays the transformed image in display means,
wherein the image processing device includes:
first means that disposes a first object in the virtual space;
second means that disposes a second object near the first object;
third means that disposes the virtual view point in a first position near the second object;
fourth means that disposes the virtual view point in a second position departed from the second object;
fifth means that calculates the degree of influence of objects other than the first object and the second object on the first object; and
sixth means that places the virtual view point in the first position before the result of calculation exceeds a threshold value, moves the virtual view point located in the first position from the first position to the second position when the result of calculation exceeds the threshold value to be fixed to the second position, and releases fixing of the virtual view point to the second position after a limited time elapses.

**12.** (Amended)The game device according to claim 11, wherein the image processing device further includes means for generating a warning mark in the display means in a case where the degree of influence exceeds the threshold value.

**13.** (Amended)The game device according to claim 11, wherein the limited time is a time period until the influenced first object exceeds the threshold value to be exploded.

**14.** (Amended)The game device according to claim 11, wherein the sixth means moves the virtual view point located in the second position to a position that is determined based on an output from the input device.

**15.** (Amended)The game device according to claim 11, wherein the sixth means moves the virtual view point located in the second position to the first position.

**16.** (Amended)An image processing method in which a game device including an image processing device that disposes a plurality of objects in a virtual space, changes the position of a virtual view point in accordance with an output from an operation device operated by a player, performs a coordinate transformation process for an image acquired from viewing the objects within the virtual space from the virtual view point, and displays the transformed image in display means is implemented,
wherein the image processing device, based on a game program, includes:
a first process that disposes a first object in the virtual space;
a second process that disposes a second object near the first object;
a third process that disposes the virtual view point in a first position near the second object;
a fourth process that disposes the virtual view point in a second position departed from the second object;
a fifth process that calculates the degree of influence of objects other than the first object and the second object on the first object; and
a sixth process that places the virtual view point in the first position before the result of calculation exceeds a threshold value, moves the virtual view point located in the first position from the first position to the second position when the result of calculation exceeds the threshold value to be fixed to the second position, and releases fixing of the virtual view point to the second position after a limited time elapses.

**17.** (Amended)A game program that allows a game device including an image processing device that disposes a plurality of objects in a virtual space, changes the position of a virtual view point in accordance with an output from an operation device operated by a player, performs a coordinate transformation process for an image acquired from viewing the objects within the virtual space from the virtual view point, and displays the transformed image in display means is implemented to perform:
a first process that disposes a first object in the virtual space;
a second process that disposes a second object near the first object;
a third process that disposes the virtual view point in a first position near the second object;
a fourth process that disposes the virtual view point in a second position departed from the second object;
a fifth process that calculates the degree of influence of objects other than the first object and the second object on the first object; and
a sixth process that places the virtual view point in the first position before the result of calculation exceeds a threshold value, moves the virtual view point located in the first position from the first position to the second position when the result of calculation exceeds the threshold value to be fixed to the second position, and releases fixing of the virtual view point to the second position after a limited time elapses.

**18.** A recording medium having the game program recorded thereon that can be readable by the computer of the image processing device.
